# EUROPÄISCHE PATENTSCHRIFT

(11) **EP 3 554 763 B1**
(45) Veröffentlichungstag und Bekanntmachung des Hinweises auf die Patenterteilung: **13.03.2024**
(21) Anmeldenummer: 17807889.5
(22) Anmeldetag: 05.12.2017
(51) Int. Cl.: B25C 1/00, F16B 15/08

(54) **EINTREIBVORRICHTUNG UND BEFESTIGUNGSELEMENTESTREIFEN**
DRIVING DEVICE AND FASTENERS STRIPS
DISPOSITIF D'ENFONCEMENT ET BANDES D'ÉLÉMENTS DE FIXATION

(30) Priorität: 15.12.2016 EP 16204199
(43) Veröffentlichungstag der Anmeldung: 23.10.2019
(73) Patentinhaber: Hilti Aktiengesellschaft, 9494 Schaan (LI)
(72) Erfinder: MIESCHER, Stefan, 9494 Schaan (LI); MERIKOSKI, Mikko, 33720 Tampere (FI)
(74) Vertreter: Hilti Aktiengesellschaft Corporate Intellectual Property
(86) Internationale Anmeldenummer: PCT/EP2017/081514
(87) Internationale Veröffentlichungsnummer: WO 2018/108630

(56) Entgegenhaltungen:
- EP-A2- 1 298 332
- DE-A1- 3 308 630
- GB-A- 1 072 132
- US-A- 2 909 780
- US-A- 4 011 785
- US-A- 4 011 785
- US-A- 4 106 618
- US-A- 4 221 153
- US-A- 4 367 973
- US-A- 4 932 821

## Beschreibung

### Technisches Gebiet

Die Anmeldung betrifft eine Vorrichtung zum Eintreiben von Befestigungselementen in einen Untergrund sowie einen Befestigungselementestreifen.

### Stand der Technik

Eintreibvorrichtungen weisen üblicherweise einen in einem Setzkanal bewegbaren Kolben zur Übertragung von Energie auf das Befestigungselement auf. Die dazu erforderliche Energie muss dabei in sehr kurzer Zeit zur Verfügung gestellt werden, weshalb beispielsweise bei sogenannten Federnaglern zunächst eine Feder gespannt wird, welche während des Eintreibvorgangs die Spannenergie schlagartig an den Kolben abgibt und diesen auf das Befestigungselement zu beschleunigt. Weiterhin weisen derartige Eintreibvorrichtungen üblicherweise ein Magazin für einen Transport der Befestigungselemente zu dem Setzkanal auf.

Die Befestigungselemente werden üblicherweise in Form von Streifen zur Verfügung gestellt, wobei ein solcher Streifen Aufnahmen für die Befestigungselemente umfasst, welche in einer Reihe angeordnet sind. Die Aufnahmen eines Streifens sind mittels Verbindungsstegen miteinander verbunden.

Aus US 4,011,785 ist ein kraftbetriebener Nagler bekannt, der ein Magazin aufweist, in dem einzelne Nägel in zwei nebeneinander liegenden Reihen transportiert werden. Die Nägel der verschiedenen Reihen sind zueinander gewinkelt orientiert.

Aus US 4,932,821 und US 4,106,618 sind Nagelstreifen bekannt, die jeweils Führungsbüchsen zur Halterung jeweils eines Schaftes eines Nagels aufweisen. Die Führungsbüchsen sind über durchtrennbare Verbindungsmittel miteinander verbunden.

Aus US 2,909,780 ist ein Nagelgerät bekannt, das ein Magazin aufweist, in dem Stifte in zwei Reihen nebeneinander transportiert werden. Die Stifte werden paarweise unter Bildung jeweils eines Nagels in einen Untergrund eingetrieben.

Aus US 4,367,973 ist ein Verbindungsband für die Verbindung von zwei oder mehr Holzelementen bekannt. Das Verbindungsband ist mit zwei zueinander versetzten Reihen von Nagelöffnungen versehen.

Aus US 4,221,153 ist ein wellenförmiges Befestigungselement bekannt, das einen Zwischenabschnitt aufweist, um die Verbindung von zwei Materialteilen zu vervollständigen. Eine Vielzahl von derartigen wellenförmigen Befestigungselementen ist durch Verklebung zu einem Streifen zusammengefasst.

Aus DE 33 08 630 A1 ist eine Nagelmagazinierungseinheit bekannt, die ein Halteelement für die Aufnahme in einem Magazin eines Nageleintreibgeräts umfasst. Das Halteelement ist plattenförmig mit zwei oder mehreren nach einer Plattenseite offenen Nuten für die Aufnahme von zwei oder mehreren Reihen einzelner Nägel nebeneinander ausgebildet.

Aus EP 1 298 332 A2 ist ein Nagelstreifen bekannt, der einen Rückenabschnitt sowie einen oberen und einen unteren Gelenkabschnitt aufweist. Zur Bildung des Nagelstreifens werden die Gelenkabschnitte jeweils so um eine Schwenklinie abgeknickt, dass sie mit Bezug auf den Rückenabschnitt rechtwinklig angeordnet sind. Nägel sind jeweils von einer Ausnehmung des oberen Gelenkabschnitts und einer Ausnehmung des unteren Gelenkabschnitts gemeinsam gehalten und in einer Reihe entlang dem Nagelstreifen angeordnet.

Da es eine gewisse Zeit in Anspruch nimmt, das Magazin der Eintreibvorrichtung mit einem Befestigungselementestreifen zu bestücken, ist es wünschenswert, dies mit möglichst vielen Befestigungselementen auf einmal zu tun.

### Darstellung der Erfindung

Gemäss einem Aspekt der Anmeldung wird ein Verfahren zum Eintreiben von Befestigungselementen in einen Untergrund mittels einer Vorrichtung zur Verfügung gestellt, wobei die Vorrichtung einen Setzkanal, ein in dem Setzkanal in einer Befestigungsrichtung bewegbares Energieübertragungselement zur Übertragung von Energie auf jeweils eines der Befestigungselemente, und ein Magazin für einen Transport der Befestigungselemente in einer Transportrichtung zu dem Setzkanal umfasst. Das Magazin transportiert gleichzeitig mehrere Reihen von Befestigungselementen, welche in einer senkrecht zur Transportrichtung und senkrecht zur Befestigungsrichtung orientierten Querrichtung hintereinander angeordnet sind, um Befestigungselemente von verschiedenen Reihen der mehreren Reihen von Befestigungselementen abwechselnd in den Setzkanal hinein zu transportieren. Die Vorrichtung weist eine zu der Transportrichtung geneigte Einführschräge zur Führung des in der Transportrichtung vordersten Befestigungselements der mehreren Reihen von Befestigungselementen in den Setzkanal hinein auf, wobei die Einführschräge die Reihe des vordersten Befestigungselements der mehreren Reihen von Befestigungselementen auf den Setzkanal ausrichtet. Bevorzugt ist die Einführschräge starr mit dem Setzkanal verbunden.

Das Energieübertragungselement weist vorzugsweise ein in die Befestigungsrichtung weisendes Kontaktende für eine Kontaktierung eines in dem Setzkanal angeordnetes Befestigungselements auf. Gemäss einer ersten Ausführungsform umfasst das Kontaktende eine senkrecht zur Befestigungsrichtung orientierte, ebene Kontaktfläche auf, wobei das Energieübertragungselement bevorzugt als Schlag- oder Schubkolben zum Eintreiben von Nägeln, Bolzen oder dergleichen ausgebildet ist. Gemäss einer zweiten Ausführungsform umfasst das Kontaktende einen Schraubenantrieb auf, wobei das Energieübertragungselement bevorzugt als drehend angetriebener Schraubenbit zum Eintreiben von Schrauben oder dergleichen ausgebildet ist.

Eine vorteilhafte Ausführungsform ist dadurch gekennzeichnet, dass das Magazin ein Vorschubelement aufweist, welches die mehreren Reihen von Befestigungselementen mit einer Kraft in der Transportrichtung beaufschlagt. Gemäss einer ersten Ausführungsform weist das Vorschubelement mehrere in der Transportrichtung zueinander versetzte Anlageflächen für eine Anlage an jeweils eine der mehreren Reihen von Befestigungselementen auf. Gemäss einer zweiten Ausführungsform weist das Vorschubelement nur eine Anlagefläche für eine Anlage an genau eine der mehreren Reihen von Befestigungselementen auf.

Eine vorteilhafte Ausführungsform ist dadurch gekennzeichnet, dass die Vorrichtung ein Anpresselement aufweist, das bei einem Anpressen der Vorrichtung an den Untergrund gegenüber dem Magazin versetzt wird, und das eine Kraftübertragungsfläche aufweist, welche eine Kraft auf das in der Transportrichtung vorderste Befestigungselement der mehreren Reihen von Befestigungselementen auf den Setzkanal zu überträgt, um das vorderste Befestigungselement in dem Setzkanal zu positionieren. Bevorzugt umfasst das Anpresselement eine Steuerfläche zur Führung des in der Transportrichtung vordersten Befestigungselements der mehreren Reihen von Befestigungselementen in den Setzkanal hinein auf.

Eine vorteilhafte Ausführungsform ist dadurch gekennzeichnet, dass das Magazin einen Führungskanal zur Führung der mehreren Reihen von Befestigungselementen aufweist, wobei der Führungskanal mit einer Mündung in den Setzkanal mündet, wobei die Mündung in der Querrichtung zwischen einer ersten Position und einer zweiten Position hin und her bewegt wird. Bevorzugt weist der Führungskanal eine Gegensteuerfläche auf, welche die Mündung in die erste oder zweite Position steuert, wenn die Steuerfläche des Anpresselements an der Gegensteuerfläche angreift. Ebenfalls bevorzugt wird der Führungskanal um eine gegenüber dem Setzkanal versetzte Schwenkachse verschwenkt. Besonders bevorzugt ist die Schwenkachse parallel zur Befestigungsrichtung ausgerichtet. Ebenfalls besonders bevorzugt schneidet die Schwenkachse den Führungskanal oder eine gedachte Verlängerung des Führungskanals in oder entgegen der Transportrichtung.

Gemäss einem Aspekt der Anmeldung ist ein Befestigungselementestreifen für eine Verwendung in einer Vorrichtung zum Eintreiben von Befestigungselementen in einen Untergrund vorgesehen und umfasst mehrere in einer Transportrichtung ausgerichtete Reihen von Aufnahmen für Befestigungselemente sowie in den Aufnahmen aufgenommene und eine Befestigungsrichtung definierende Befestigungselemente, wobei die Reihen von Aufnahmen in einer senkrecht zur Transportrichtung und senkrecht zur Befestigungsrichtung orientierten Querrichtung hintereinander angeordnet sind. Weiterhin umfasst der Befestigungselementestreifen einen Verbindungssteg, der eine Aufnahme einer ersten Reihe der mehreren Reihen mit einer Aufnahme einer zweiten Reihe der mehreren Reihen miteinander verbindet. Jede Aufnahme ist zu allen anderen Aufnahmen der mehreren Reihen von Aufnahmen in der Transportrichtung versetzt. Bevorzugt ist der in der Transportrichtung gemessene Versatz zwischen zwei in der Transportrichtung aufeinanderfolgenden Aufnahmen für alle Aufnahmen gleich. Bevorzugt ist jede Aufnahme der ersten Reihe mit einer benachbarten Aufnahme einer zweiten Reihe direkt über einen Verbindungssteg verbunden. Bevorzugt ist der Verbindungssteg mit der Aufnahme der ersten Reihe der mehreren Reihen und/oder mit der Aufnahme der zweiten Reihe der mehreren Reihen starr verbunden. Ebenfalls bevorzugt bilden der Verbindungssteg, die Aufnahme der ersten Reihe der mehreren Reihen und/oder die Aufnahme der zweiten Reihe der mehreren Reihen ein integrales Teil, welches bevorzugt aus einem einzigen Material besteht.

Eine vorteilhafte Ausführungsform ist dadurch gekennzeichnet, dass der Verbindungssteg eine Sollbruchstelle für eine Vereinzelung der ersten Aufnahme in einer Eintreibvorrichtung aufweist.

Eine vorteilhafte Ausführungsform ist dadurch gekennzeichnet, dass der Befestigungselementestreifen einen Stützvorsprung mit einer Anlagefläche für eine Anlage des Befestigungselementestreifens an einen Führungskanal eines Magazins einer Eintreibvorrichtung aufweist, wobei der Stützvorsprung von einer Aufnahme einer äussersten Reihe der mehreren Reihen abragt und gegenüber einem in der Aufnahme aufgenommenen Befestigungselement in der Transportrichtung versetzt ist. Durch den Versatz in der Transportrichtung stützt der Stützvorsprung den Befestigungselementestreifen in dem Führungskanal gegen ein Verkippen um eine in die Befestigungsrichtung weisende Kippachse ab, wodurch die Gefahr eines Verklemmens des Befestigungselementestreifens in dem Führungskanal unter Umständen reduziert ist.

Eine vorteilhafte Ausführungsform ist dadurch gekennzeichnet, dass der Befestigungselementestreifen dafür geeignet ist, in einem Magazin einer Eintreibvorrichtung in einer Transportrichtung transportiert zu werden.

### Ausführungsbeispiele

Nachfolgend werden Ausführungsformen einer Vorrichtung zum Eintreiben eines Befestigungselements in einen Untergrund anhand von Beispielen unter Bezugnahme auf die Zeichnungen näher erläutert. Es zeigen:
- Fig. 1: eine Seitenansicht einer Eintreibvorrichtung,
- Fig. 2: eine Seitenansicht einer Eintreibvorrichtung mit geöffnetem Gehäuse,
- Fig. 3: eine Aufsicht eines Magazins,
- Fig. 4: eine Teilansicht eines Magazins in zwei verschiedenen Stellungen,
- Fig. 5: eine Aufsicht eines Magazins,
- Fig. 6: eine Teilansicht eines Magazins in zwei verschiedenen Stellungen,
- Fig. 7: eine Aufsicht eines Magazins,
- Fig. 8: eine Aufsicht eines Magazins,
- Fig. 9: eine Schnittansicht eines Setzkanals und eines Magazins in zwei verschiedenen Stellungen,
- Fig. 10: einen Setzkanal und einen Befestigungselementestreifen,
- Fig. 11: eine Aufsicht eines Befestigungselementestreifens,
- Fig. 12: eine Aufsicht eines Befestigungselementestreifens,
- Fig. 13: eine Aufsicht eines Befestigungselementestreifens,
- Fig. 14: eine Aufsicht eines Befestigungselementestreifens,
- Fig. 15: einen Querschnitt und eine Aufsicht eines Befestigungselementestreifens,
- Fig. 16: einen Querschnitt und eine Aufsicht eines Befestigungselementestreifens,
- Fig. 17: einen Querschnitt und eine Aufsicht eines Befestigungselementestreifens,
- Fig. 18: einen Querschnitt und eine Aufsicht eines Befestigungselementestreifens,
- Fig. 19: eine Teilansicht eines Befestigungselementestreifens,
- Fig. 20: eine Teilansicht eines Magazins,
- Fig. 21: eine Schnittansicht eines Magazins und eines Befestigungselementestreifens,
- Fig. 22: eine Schnittansicht eines Magazins und eines Befestigungselementestreifens sowie eine Teilansicht des Befestigungselementestreifens,
- Fig. 23: einen Setzkanal und einen Befestigungselementestreifen,
- Fig. 24: einen Setzkanal und einen Befestigungselementestreifen,
- Fig. 25: eine Schnittansicht eines Magazins und eines Befestigungselementestreifens,
- Fig. 26: eine Schnittansicht eines Magazins und eines Befestigungselementestreifens,
- Fig. 27: einen Setzkanal und einen Befestigungselementestreifen,
- Fig. 28: eine Teilansicht eines Befestigungselementestreifens,
- Fig. 29: einen Setzkanal und einen Befestigungselementestreifen,
- Fig. 30: eine Schnittansicht eines Befestigungselementestreifens und
- Fig. 31: eine Teilansicht eines Befestigungselementestreifens.

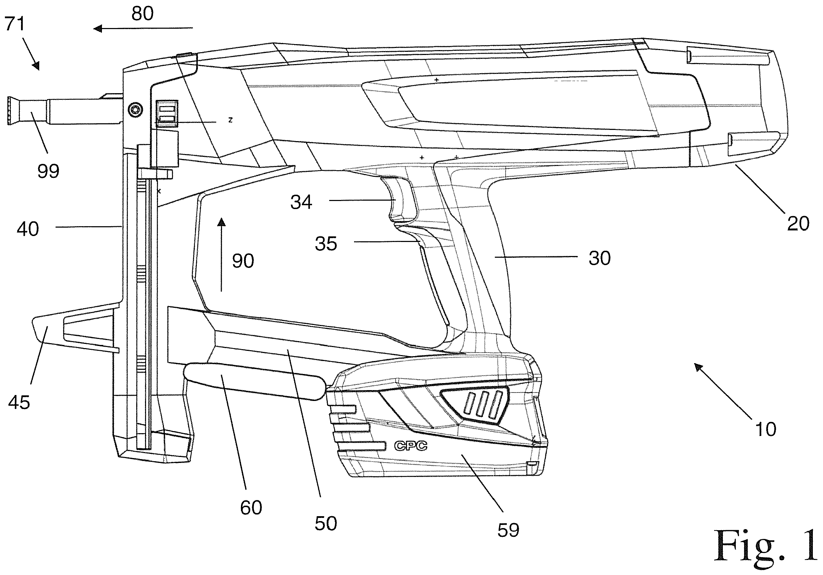

Fig. 1 zeigt eine Eintreibvorrichtung 10 zum Eintreiben eines Befestigungselements, beispielsweise eines Nagels oder Bolzens, in einen nicht dargestellten Untergrund in einer Seitenansicht. Die Eintreibvorrichtung 10 weist ein nicht dargestelltes Energieübertragungselement zur Übertragung von Energie auf das Befestigungselement sowie ein Gehäuse 20 auf, in welchem das Energieübertragungselement und eine ebenfalls nicht dargestellte Antriebseinrichtung zur Beförderung des Energieübertragungselementes aufgenommen sind.

Die Eintreibvorrichtung 10 weist ferner einen Griff 30, ein Magazin 40 und eine den Griff 30 mit dem Magazin 40 verbindende Brücke 50 auf. Das Magazin ist nicht abnehmbar. An der Brücke 50 sind ein Gerüsthaken 60 zur Aufhängung der Eintreibvorrichtung 10 an einem Gerüst oder dergleichen und ein als Akku 59 ausgebildeter elektrischer Energiespeicher befestigt. An dem Griff 30 sind ein Abzug 34 sowie ein als Handschalter 35 ausgebildeter Grifffühler angeordnet. Ein Ausrichten der Eintreibvorrichtung senkrecht zu einem Untergrund wird durch eine Ausrichthilfe 45 unterstützt.

Weiterhin weist die Eintreibvorrichtung 10 einen Setzkanal 99 für eine Führung des Befestigungselements und eine Anpresseinrichtung 71 zur Erkennung eines Abstandes der Eintreibvorrichtung 10 von einem nicht dargestellten Untergrund auf. Zu diesem Zweck umfasst die Anpresseinrichtung 71 ein Anpresselement, welches bei einem Anpressen der Eintreibvorrichtung 10 an den Untergrund gegenüber dem Magazin 40 versetzt wird. Das Anpresselement wird durch den Setzkanal 99 gebildet. Bei nicht gezeigten Ausführungsbeispielen ist das Anpresselement neben dem Setzkanal angeordnet und überragt diesen im nicht angepressten Zustand in Richtung Untergrund. Das Magazin 40 dient dem Transport von Befestigungselementen in einer Transportrichtung 90 zu dem Setzkanal 99.

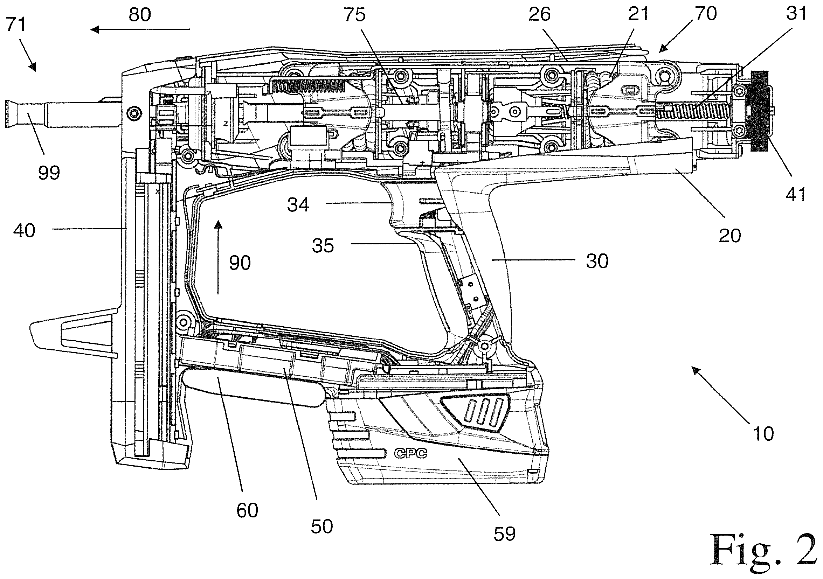

Fig. 2 zeigt die Eintreibvorrichtung 10 mit geöffnetem Gehäuse 20. In dem Gehäuse 20 ist eine Antriebseinrichtung 70 zur Beförderung eines in der Zeichnung teilweise verdeckten Energieübertragungselementes 75 aufgenommen. Das Energieübertragungselement 75 wird in einer Befestigungsrichtung 80 bewegt, um Energie auf jeweils ein von dem Magazin 40 in den Setzkanal 99 hinein transportiertes Befestigungselement zu übertragen.

Die Antriebseinrichtung 70 umfasst einen nicht dargestellten Elektromotor zur Umwandlung von elektrischer Energie aus dem Akku 59 in Drehenergie, eine ein Getriebe 41 umfassende Drehmomentübertragungseinrichtung zur Übertragung eines Drehmomentes des Elektromotors auf einen als Spindeltrieb 31 ausgebildeten Bewegungsumwandler, eine einen Rollenzug 26 umfassende Kraftübertragungseinrichtung zur Übertragung einer Kraft von dem Bewegungsumwandler auf einen als Feder 21 ausgebildeten mechanischen Energiespeicher und zur Übertragung einer Kraft von der Feder auf das Energieübertragungselement.

Bei nicht gezeigten Ausführungsbeispielen wird die Antriebseinrichtung zur Beförderung des Energieübertragungselementes mittels eines Schwungrads, Druckluft, Gas- oder Pulververbrennung betrieben.

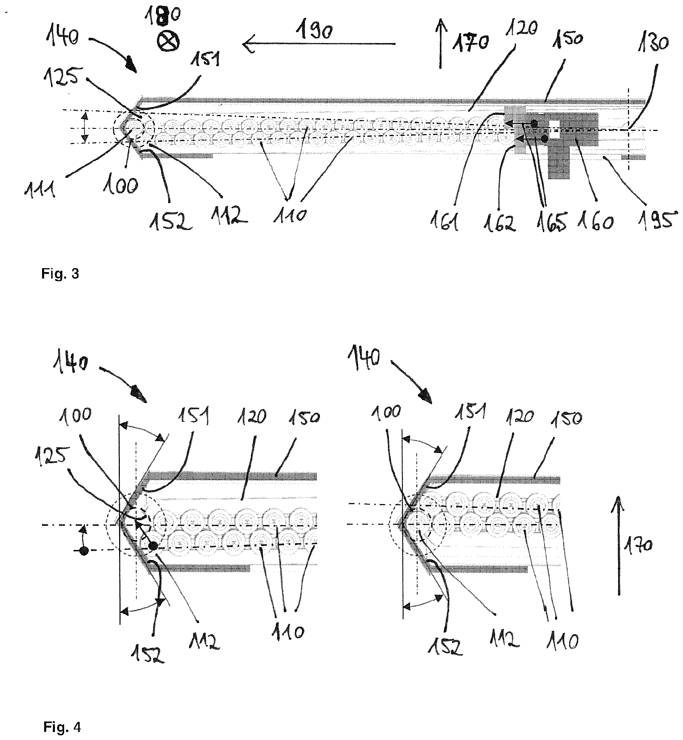

In den Fig. 3 und 4 ist ein Ausführungsbeispiel eines Magazins 140 in einer Aufsicht dargestellt. In das Magazin 140 sind Befestigungselemente 110 eingelegt, welche in einer Transportrichtung 190 in einen Setzkanal 100 transportiert werden. Die Befestigungselemente 110 sind als Nägel ausgebildet und definieren eine Befestigungsrichtung 180 in die Zeichenebene hinein, so dass in Fig. 3 und 4 nur die Köpfe der Befestigungselemente 110 zu sehen sind. Die Befestigungselemente 110 sind in zwei Reihen angeordnet, welche in einer senkrecht zur Transportrichtung 190 und senkrecht zur Befestigungsrichtung 180 orientierten Querrichtung 170 hintereinander angeordnet sind. Bei nicht gezeigten Ausführungsbeispielen sind die Befestigungselemente in drei oder mehr Reihen angeordnet, welche in der Querrichtung hintereinander angeordnet sind. Das Magazin 140 transportiert die Befestigungselemente 110 der beiden Reihen abwechselnd in den Setzkanal hinein.

Das Magazin 140 umfasst ein Magazingehäuse 150, welches eine erste Einführschräge 151 und eine zweite Einführschräge 152 aufweist. Die erste Einführschräge 151 ist zu der Transportrichtung 190 geneigt und dient einer Führung des in der Transportrichtung 190 vordersten Befestigungselements 111 der in Fig. 3 und 4 jeweils oberen Reihe von Befestigungselementen 110 in den Setzkanal 100 hinein. Die zweite Einführschräge 152 ist ebenfalls zu der Transportrichtung 190 geneigt und dient einer Führung des in der Transportrichtung 190 vordersten Befestigungselements 112 der in Fig. 3 und 4 jeweils unteren Reihe von Befestigungselementen 110 in den Setzkanal 100 hinein, nachdem das vorderste Befestigungselement 111 der oberen Reihe gesetzt wurde und das Magazin 140 und den Setzkanal 100 verlassen hat, wie in Fig. 4 dargestellt ist. Das Magazingehäuse 150 und damit die erste Einführschräge 151 und die zweite Einführschräge 152 sind starr mit dem Setzkanal 100 verbunden. Bei nicht gezeigten Ausführungsbeispielen sind die Einführschrägen separat vom Magazin oder dessen Gehäuse ausgebildet. In jedem Fall sind die Einführschrägen bevorzugt starr mit dem Setzkanal verbunden.

Das Magazin 140 weist einen Führungskanal 120 zur Führung der zwei Reihen von Befestigungselementen 110 bis in den Setzkanal 100 hinein auf. Der Führungskanal 120 mündet mit einer Mündung 125 in den Setzkanal 100. Die Mündung 125 ist in der Querrichtung 170 zwischen einer ersten Position, welche in Fig. 4 links gezeigt ist, und einer zweiten Position, welche in Fig. 4 rechts gezeigt ist, hin und her bewegbar. Zu diesem Zweck ist der Führungskanal 120 um eine gegenüber dem Setzkanal versetzte und parallel zur Befestigungsrichtung 180 in die Zeichenebene von Fig. 3 hinein gerichtete Schwenkachse 130 verschwenkbar gelagert. Die Schwenkachse 130 schneidet eine gedachte Verlängerung des Führungskanals 120 entgegen der Transportrichtung 190, also in Fig. 3 nach rechts. Bei nicht gezeigten Ausführungsbeispielen ist der Führungskanal parallel zwischen der entsprechenden ersten und zweiten Position verschiebbar.

Wenn die zwei Reihen von Befestigungselementen 110 in dem verschwenkbaren Führungskanal 120 geführt sind, ist es vorteilhaft möglich, dass die erste Einführschräge 151 die in Fig. 3 obere Reihe auf den Setzkanal 100 ausrichtet, indem das vorderste Befestigungselement 111 der oberen Reihe an der ersten Einführschräge 151 abgleitet. Analog ist es vorteilhaft möglich, dass die zweite Einführschräge 152 die in Fig. 3 untere Reihe auf den Setzkanal 100 ausrichtet, indem das vorderste Befestigungselement 112 der unteren Reihe an der zweiten Einführschräge 152 abgleitet.

Weiterhin weist das Magazin 140 ein Vorschubelement 160 auf, welches die Befestigungselemente 110 mit einer Kraft 165 in der Transportrichtung 190 beaufschlagt, um den Transport der Befestigungselemente 110 zu bewirken. Zu diesem Zweck weist das Vorschubelement 160 mehrere in der Transportrichtung 190 zueinander versetzte Anlageflächen 161, 162 für eine Anlage an jeweils eine der mehreren Reihen von Befestigungselementen 110 auf. Eine erste Anlagefläche 161 liegt dabei an der in Fig. 3 oberen Reihe von Befestigungselementen 110 an, wohingegen eine zweite Anlagefläche 162 an der in Fig. 3 unteren Reihe von Befestigungselementen 110 anliegt. Das Vorschubelement 160 ist in der Transportrichtung 190 bewegbar und in einer Führungsschiene 195 geführt. Die Führungsschiene 195 ist Teil des Magazingehäuses 150 oder starr mit dem Magazingehäuse 150 verbunden. Eine nicht dargestellte Feder, beispielsweise eine Rollfeder, beaufschlagt das Vorschubelement 160 mit der Kraft in der Transportrichtung 190 auf den Setzkanal 100 zu. Zum Spannen der Feder wird das Vorschubelement 160 durch einen Benutzer der Eintreibvorrichtung manuell entgegen der Transportrichtung 190 in Fig. 3 nach rechts geschoben und nach dem Einlegen der Befestigungselemente 110 losgelassen und/oder mit den Befestigungselementen 110 in Anlage gebracht.

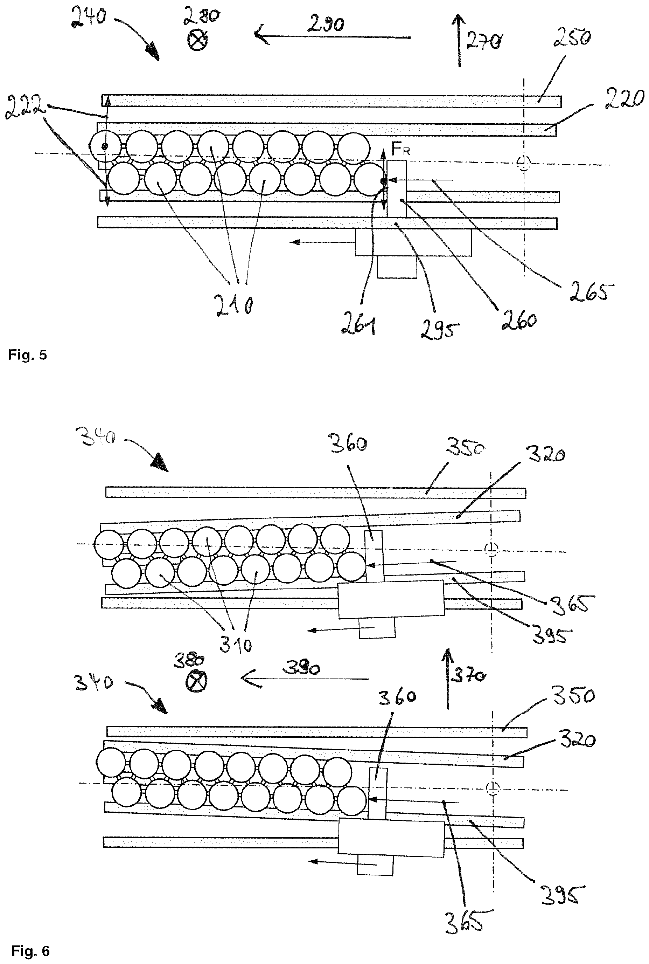

In Fig. 5 ist ein Magazin 240 in einer Aufsicht teilweise dargestellt. In das Magazin 240 sind Befestigungselemente 210 eingelegt, welche in einer Transportrichtung 290 in einen nicht dargestellten Setzkanal transportiert werden. Die Befestigungselemente 210 definieren eine Befestigungsrichtung 280 in die Zeichenebene hinein, so dass in Fig. 5 nur die Köpfe der Befestigungselemente 210 zu sehen sind. Die Befestigungselemente 210 sind in zwei Reihen angeordnet, welche in einer senkrecht zur Transportrichtung 290 und senkrecht zur Befestigungsrichtung 280 orientierten Querrichtung 270 hintereinander angeordnet sind. Das Magazin 240 transportiert die Befestigungselemente 210 der beiden Reihen abwechselnd in den Setzkanal hinein.

Das Magazin 240 umfasst ein Magazingehäuse 250 und einen Führungskanal 220 zur Führung der zwei Reihen von Befestigungselementen 210 bis in den Setzkanal hinein. Der Führungskanal 220 ist in der Querrichtung 270 hin und her bewegbar. Weiterhin weist das Magazin 240 ein Vorschubelement 260 auf, welches die Befestigungselemente 210 mit einer Kraft 265 in der Transportrichtung 290 beaufschlagt, um den Transport der Befestigungselemente 210 zu bewirken. Zu diesem Zweck weist das Vorschubelement 260 genau eine Anlagefläche 261 für eine Anlage an nur eine der mehreren Reihen von Befestigungselementen 210 auf. Das Vorschubelement 260 ist in der Transportrichtung 290 bewegbar und in einer Führungsschiene 295 geführt. Die Führungsschiene 295 ist Teil des Magazingehäuses 250 oder starr mit dem Magazingehäuse 250 verbunden. Das Vorschubelement 260 ist dabei gegenüber dem Führungskanal 220 in der Befestigungsrichtung 280 versetzt angeordnet.

Durch die Hin- und Herbewegung 222 des Führungskanals 220 und der darin geführten Befestigungselemente 210 in der Querrichtung 270 entsteht eine der Hin- und Herbewegung 222 entgegen gerichtete Reibungskraft F_{R}, welche beim Transport der Befestigungselemente 210 durch das Vorschubelement 260 überwunden werden muss.

In Fig. 6 ist ein Magazin 340 in einer Aufsicht teilweise dargestellt. In das Magazin 340 sind Befestigungselemente 310 eingelegt, welche in einer Transportrichtung 390 in einen nicht dargestellten Setzkanal transportiert werden. Die Befestigungselemente 310 definieren eine Befestigungsrichtung 380 in die Zeichenebene hinein, so dass in Fig. 6 nur die Köpfe der Befestigungselemente 310 zu sehen sind. Die Befestigungselemente 310 sind in zwei Reihen angeordnet, welche in einer senkrecht zur Transportrichtung 390 und senkrecht zur Befestigungsrichtung 380 orientierten Querrichtung 370 hintereinander angeordnet sind. Das Magazin 340 transportiert die Befestigungselemente 310 der beiden Reihen abwechselnd in den Setzkanal hinein.

Das Magazin 340 umfasst ein Magazingehäuse 350 und einen Führungskanal 320 zur Führung der zwei Reihen von Befestigungselementen 310 bis in den Setzkanal hinein. Der Führungskanal 320 ist in der Querrichtung 370 zwischen einer ersten Position, welche in Fig. 6 oben dargestellt ist, und einer zweiten Position, welche in Fig. 6 unten dargestellt ist, hin und her bewegbar. Weiterhin weist das Magazin 340 ein Vorschubelement 360 auf, welches die Befestigungselemente 310 mit einer Kraft 365 im Wesentlichen in der Transportrichtung 390 beaufschlagt, um den Transport der Befestigungselemente 310 zu bewirken. Zu diesem Zweck weist das Vorschubelement 360 eine Anlagefläche 361 für eine Anlage an die mehreren Reihen von Befestigungselementen 310 auf. Das Vorschubelement 360 ist in der Transportrichtung 390 bewegbar und in einer Führungsschiene 395 geführt. Die Führungsschiene 395 ist Teil des Führungskanals 320 oder starr mit dem Führungskanal 320 verbunden. Eine Reibungskraft zwischen dem Vorschubelement 360 und den Befestigungselementen 310 in der Querrichtung 370 wird dadurch vermieden. Dafür muss bei der Hin- und Herbewegung des Führungskanals 320 in der Querrichtung 370 die Masse des Vorschubelements 360 sowie der Führungsschiene 395 mitbewegt werden.

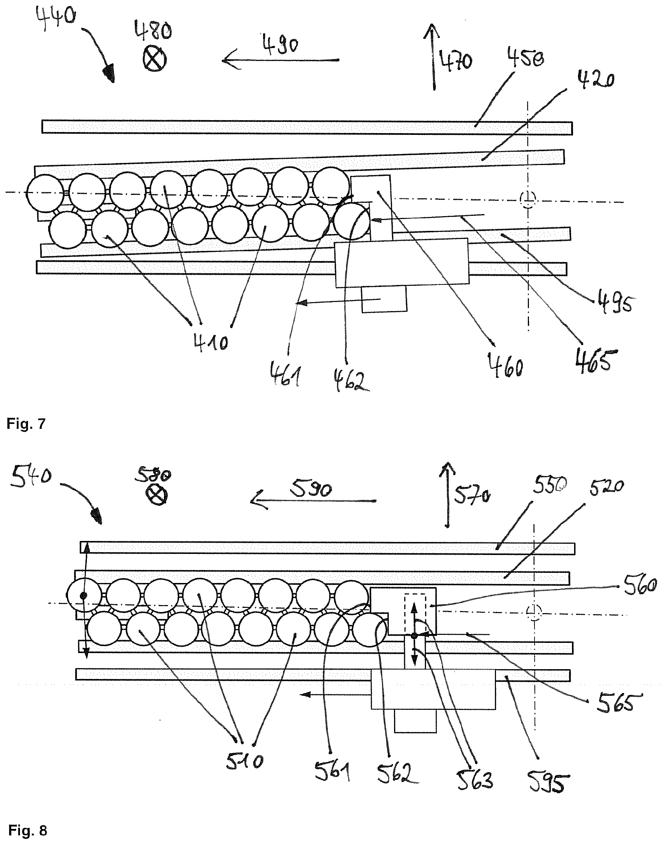

In Fig. 7 ist ein Magazin 440 in einer Aufsicht teilweise dargestellt. In das Magazin 440 sind Befestigungselemente 410 eingelegt, welche in einer Transportrichtung 490 in einen nicht dargestellten Setzkanal transportiert werden. Die Befestigungselemente 410 definieren eine Befestigungsrichtung 480 in die Zeichenebene hinein, so dass in Fig. 7 nur die Köpfe der Befestigungselemente 410 zu sehen sind. Die Befestigungselemente 410 sind in zwei Reihen angeordnet, welche in einer senkrecht zur Transportrichtung 490 und senkrecht zur Befestigungsrichtung 480 orientierten Querrichtung 470 hintereinander angeordnet sind. Das Magazin 440 transportiert die Befestigungselemente 410 der beiden Reihen abwechselnd in den Setzkanal hinein.

Das Magazin 440 umfasst ein Magazingehäuse 450 und einen Führungskanal 420 zur Führung der zwei Reihen von Befestigungselementen 410 bis in den Setzkanal hinein. Der Führungskanal 420 ist in der Querrichtung 470 hin und her bewegbar. Weiterhin weist das Magazin 440 ein Vorschubelement 460 auf, welches die Befestigungselemente 410 mit einer Kraft 465 im Wesentlichen in der Transportrichtung 490 beaufschlagt, um den Transport der Befestigungselemente 410 zu bewirken. Zu diesem Zweck weist das Vorschubelement 460 mehrere in der Transportrichtung 490 zueinander versetzte Anlageflächen 461, 462 für eine Anlage an jeweils eine der mehreren Reihen von Befestigungselementen 410 auf. Eine erste Anlagefläche 461 liegt dabei an der in Fig. 7 oberen Reihe von Befestigungselementen 410 an, wohingegen eine zweite Anlagefläche 462 an der in Fig. 7 unteren Reihe von Befestigungselementen 410 anliegt. Das Vorschubelement 460 ist in der Transportrichtung 490 bewegbar und in einer Führungsschiene 495 geführt. Die Führungsschiene 495 ist Teil des Führungskanals 420 oder starr mit dem Führungskanal 420 verbunden.

In Fig. 8 ist ein Magazin 540 in einer Aufsicht teilweise dargestellt. In das Magazin 540 sind Befestigungselemente 510 eingelegt, welche in einer Transportrichtung 590 in einen nicht dargestellten Setzkanal transportiert werden. Die Befestigungselemente 510 definieren eine Befestigungsrichtung 580 in die Zeichenebene hinein, so dass in Fig. 7 nur die Köpfe der Befestigungselemente 510 zu sehen sind. Die Befestigungselemente 510 sind in zwei Reihen angeordnet, welche in einer senkrecht zur Transportrichtung 590 und senkrecht zur Befestigungsrichtung 580 orientierten Querrichtung 570 hintereinander angeordnet sind. Das Magazin 540 transportiert die Befestigungselemente 510 der beiden Reihen abwechselnd in den Setzkanal hinein.

Das Magazin 540 umfasst ein Magazingehäuse 550 und einen Führungskanal 520 zur Führung der zwei Reihen von Befestigungselementen 510 bis in den Setzkanal hinein. Der Führungskanal 520 ist in der Querrichtung 570 hin und her bewegbar. Weiterhin weist das Magazin 540 ein Vorschubelement 560 auf, welches die Befestigungselemente 510 mit einer Kraft 565 in der Transportrichtung 590 beaufschlagt, um den Transport der Befestigungselemente 510 zu bewirken. Zu diesem Zweck weist das Vorschubelement 560 mehrere in der Transportrichtung 590 zueinander versetzte Anlageflächen 561, 562 für eine Anlage an jeweils eine der mehreren Reihen von Befestigungselementen 510 auf. Eine erste Anlagefläche 561 liegt dabei an der in Fig. 8 oberen Reihe von Befestigungselementen 510 an, wohingegen eine zweite Anlagefläche 562 an der in Fig. 8 unteren Reihe von Befestigungselementen 510 anliegt. Das Vorschubelement 560 ist in der Transportrichtung 590 bewegbar und in einer Führungsschiene 595 geführt. Die Führungsschiene 595 ist Teil des Magazingehäuses 550 oder starr mit dem Magazingehäuse 550 verbunden. Um dennoch die Hin- und Herbewegung des Führungskanals 520 und damit der Befestigungselemente 510 in der Querrichtung 570 mitzumachen, ist das Vorschubelement 560 gegenüber der Führungsschiene 595 entlang der Pfeile 563, und damit in der Querrichtung 570, verschieblich gelagert.

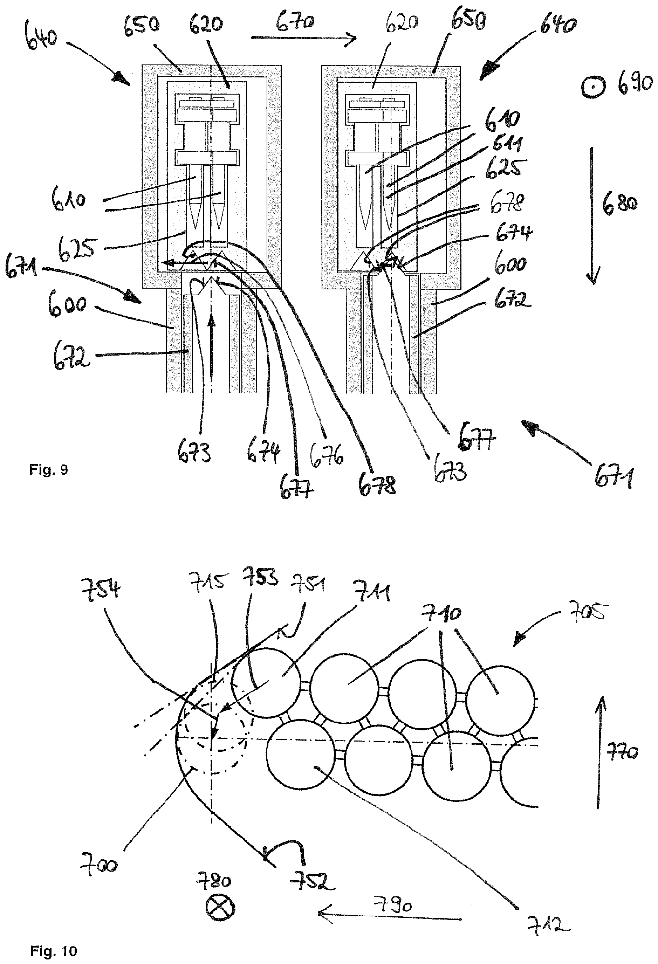

In Fig. 9 sind ein Setzkanal 600 und ein Magazin 640 zwei Mal in einer Schnittansicht dargestellt. In das Magazin 640 sind Befestigungselemente 610 eingelegt, welche in einer Transportrichtung 690 aus der Zeichenebene heraus in den Setzkanal 600 transportiert werden. Die Befestigungselemente 610 definieren eine Befestigungsrichtung 680. Die Befestigungselemente 610 sind in zwei Reihen angeordnet, welche in einer senkrecht zur Transportrichtung 690 und senkrecht zur Befestigungsrichtung 680 orientierten Querrichtung 670 hintereinander angeordnet sind. Das Magazin 640 transportiert die Befestigungselemente 610 der beiden Reihen abwechselnd in den Setzkanal hinein.

Das Magazin 640 umfasst ein Magazingehäuse 650 und einen Führungskanal 620 zur Führung der zwei Reihen von Befestigungselementen 610 bis in den Setzkanal 600 hinein. Der Führungskanal 620 mündet mit einer Mündung 625 in den Setzkanal 600. Die Mündung 625 ist in der Querrichtung 670 zwischen einer ersten Position, welche in Fig. 9 links gezeigt ist, und einer zweiten Position, welche in Fig. 9 rechts gezeigt ist, hin und her bewegbar. Zu diesem Zweck ist der Führungskanal 620 um eine gegenüber dem Setzkanal 600 in die Zeichenebene hinein versetzte und parallel zur Befestigungsrichtung 680 orientierte Schwenkachse 130 verschwenkbar gelagert.

Der Setzkanal 600 und das Magazin 640 sind Teile einer Eintreibvorrichtung, die weiterhin eine Anpresseinrichtung 671 mit einem Anpresselement 672 umfasst. Das Anpresselement 672 weist eine erste Kraftübertragungsfläche 673 zur Übertragung einer Kraft 676 entgegen der Querrichtung 670 auf den Führungskanal 620 und eine zweite Kraftübertragungsfläche 674 zur Übertragung einer Kraft in der Querrichtung 670 auf den Führungskanal 620 auf. Der Führungskanal 620 weist seinerseits eine erste Gegenfläche 677 zur Übertragung der Kraft 676 entgegen der Querrichtung 670 und eine zweite Gegenfläche 678 zur Übertragung der Kraft in der Querrichtung 670 auf. Sobald die Eintreibvorrichtung in der Befestigungsrichtung 680 an einen Untergrund angepresst wird, wird das Anpresselement 672 gegenüber dem Magazin 640 und damit dem Setzkanal 620 entgegen der Befestigungsrichtung 680 versetzt, so dass die erste Kraftübertragungsfläche 673 mit der ersten Gegenfläche 677 in Anlage kommt und die Kraft 676 entgegen der Querrichtung 670 auf den Führungskanal 620 und letztlich auf die Befestigungselemente 610 wirkt. Die Mündung 625 des Führungskanals 620 und die Befestigungselemente 610 werden dadurch in die in Fig. 9 rechts dargestellte zweite Position bewegt, so dass ein in der Transportrichtung 690 vorderstes Befestigungselement 611 der mehreren Reihen von Befestigungselementen 610 in dem Setzkanal 600 positioniert wird. Die erste Kraftübertragungsfläche 673 wirkt als Steuerfläche zur Führung des in der Transportrichtung 690 vordersten Befestigungselements 611 in den Setzkanal 600 hinein. Die erste Gegenfläche 677 wirkt als Gegensteuerfläche zur gesteuerten Bewegung der Mündung 625 in die zweite Position, wenn die erste Kraftübertragungsfläche 673 an der ersten Gegenfläche 677 angreift.

In Fig. 10 sind ein Setzkanal 700 und ein Befestigungselementestreifen 705 mit Befestigungselementen 710 in einer Aufsicht teilweise dargestellt. Die Befestigungselemente 710 werden in einem nicht gezeigten Magazin in einer Transportrichtung 190 in den Setzkanal 700 transportiert. Die Befestigungselemente 710 sind als Nägel ausgebildet und definieren eine Befestigungsrichtung 780 in die Zeichenebene hinein, so dass in Fig. 10 nur die Köpfe der Befestigungselemente 710 zu sehen sind. Die Befestigungselemente 710 sind in zwei Reihen angeordnet, welche in einer senkrecht zur Transportrichtung 790 und senkrecht zur Befestigungsrichtung 780 orientierten Querrichtung 770 hintereinander angeordnet sind.

An dem Setzkanal 700 starr befestigt sind eine erste Einführschräge 751 und eine zweite Einführschräge 752. Die erste Einführschräge 751 ist zu der Transportrichtung 790 geneigt und dient einer Führung des in der Transportrichtung 790 vordersten Befestigungselements 711 der in Fig. 10 oberen Reihe von Befestigungselementen 710 in einer ersten Richtung 753 parallel zur ersten Einführschräge 751 auf den Setzkanal 700 zu, zumindest bis zu einer gebrochen dargestellten Zwischenposition 715. Die gewünschte Positionierung des in der Transportrichtung 790 vordersten Befestigungselements 711 der in Fig. 10 oberen Reihe von Befestigungselementen 710 in dem Setzkanal 700 wird dann vorzugsweise mittels einem Anpresselement analog zu Fig. 9 bewerkstelligt oder sichergestellt, indem das vorderste Befestigungselement 711 in einer zweiten Richtung 754 in den Setzkanal 700 hineinbewegt wird. Die zweite Richtung 754 ist gegenüber der Transportrichtung 790 stärker geneigt als die erste Richtung 753, wodurch bei gleicher Anordnung der Befestigungselemente 710 in dem Befestigungselementestreifen 705 ein kleinerer Neigungswinkel der ersten Einführschräge 751 gegenüber der Transportrichtung 790 möglich ist. Dadurch werden unter Umständen Reibungskräfte zwischen dem vordersten Befestigungselement 711 und der ersten Einführschräge 751 und das Risiko eines Verklemmens des Befestigungselementestreifens 705 reduziert.

Die zweite Einführschräge 752 ist ebenfalls zu der Transportrichtung 790 geneigt und dient einer Führung des in der Transportrichtung 790 vordersten Befestigungselements 712 der in Fig. 10 unteren Reihe von Befestigungselementen 710 in den Setzkanal 100 hinein, nachdem das vorderste Befestigungselement 711 der oberen Reihe gesetzt wurde und den Setzkanal 700 verlassen hat.

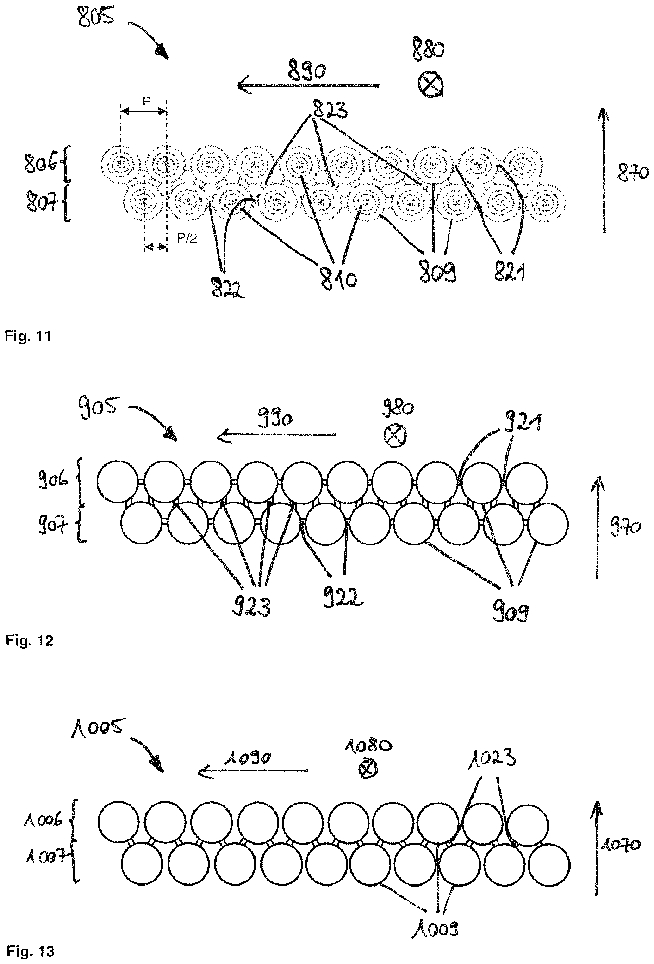

In Fig. 11 ist ein Befestigungselementestreifen 805 in einer Aufsicht dargestellt, welcher zwei in einer Transportrichtung 890 ausgerichtete Reihen 806, 807 von Aufnahmen 809 sowie in den Aufnahmen 809 aufgenommene und eine in die Zeichenebene hinein gerichtete Befestigungsrichtung 880 definierende Befestigungselemente 810 umfasst. Die Reihen 806, 807 von Aufnahmen 809 und damit von Befestigungselementen 810 sind in einer senkrecht zur Transportrichtung 890 und senkrecht zur Befestigungsrichtung 880 orientierten Querrichtung 870 hintereinander angeordnet.

Der Befestigungselementestreifen 805 weist eine Vielzahl von ersten Verbindungsstegen 821 auf, welche jeweils zwei benachbarte Aufnahmen innerhalb einer ersten Reihe 806 von Aufnahmen 809 miteinander verbinden. Weiterhin weist der Befestigungselementestreifen 805 eine Vielzahl von zweiten Verbindungsstegen 822 auf, welche jeweils zwei benachbarte Aufnahmen innerhalb einer zweiten Reihe 807 von Aufnahmen 809 miteinander verbinden. Weiterhin weist der Befestigungselementestreifen 805 eine Vielzahl von dritten Verbindungsstegen 823 auf, welche jeweils eine Aufnahme der ersten Reihe 806 mit einer Aufnahme der zweiten Reihe 807 miteinander verbinden.

Dabei ist jede Aufnahme der ersten Reihe 806 mit einer benachbarten Aufnahme der zweiten Reihe 807 direkt über einen dritten Verbindungssteg 823 verbunden. Die ersten Verbindungsstege 821 und die zweiten Verbindungsstege 822 sind parallel zur Transportrichtung 890 ausgerichtet, wohingegen die dritten Verbindungsstege 823 sowohl gegenüber der Transportrichtung 890 als auch gegenüber der Querrichtung 870 geneigt ausgerichtet sind. Ausserdem ist jede Aufnahme zu allen anderen Aufnahmen der Reihen 806, 807 in der Transportrichtung 890 versetzt angeordnet. Der in der Transportrichtung 890 gemessene Versatz P/2 zwischen zwei in der Transportrichtung 890 unmittelbar aufeinanderfolgenden Aufnahmen ist für alle Aufnahmen gleich, nämlich genau halb so gross wie der Versatz P zwischen zwei unmittelbar aufeinanderfolgenden Aufnahmen innerhalb einer der Reihen 806, 807.

Die ersten Verbindungsstege 821, zweiten Verbindungsstege 822, dritten Verbindungsstege 823 und Aufnahmen 809 sind zusammen als integrales Teil ausgebildet, welches aus Kunststoff besteht und beispielsweise mittels eines Spritzgussverfahrens hergestellt ist. Dadurch ist jede Aufnahme der ersten Reihe 806 mit zumindest einer Aufnahme der zweiten Reihe 807 starr verbunden. Durch geeignete Auswahl des Materials und der Abmessungen der Verbindungsstege 821, 822, 823 ist eine gewünschte Steifigkeit des Befestigungselementestreifens 805 erreichbar. Bei nicht gezeigten Ausführungsbeispielen, werden die zwei oder mehr Reihen von Aufnahmen zunächst separat hergestellt und dann miteinander verbunden, beispielsweise miteinander verrastet, verschweisst oder verklebt. Bei weiteren nicht gezeigten Ausführungsbeispielen bestehen die Aufnahmen und/oder die Verbindungsstege zumindest teilweise aus Kunststoff, Metall, Papier oder mehreren der genannten Materialien.

In Fig. 12 ist ein Befestigungselementestreifen 905 in einer Aufsicht dargestellt, welcher zwei in einer Transportrichtung 990 ausgerichtete Reihen 906, 907 von Aufnahmen 909 sowie in den Aufnahmen 909 aufgenommene und eine in die Zeichenebene hinein gerichtete Befestigungsrichtung 980 definierende, nicht gezeigte Befestigungselemente umfasst. Die Reihen 906, 907 von Aufnahmen 909 sind in einer senkrecht zur Transportrichtung 990 und senkrecht zur Befestigungsrichtung 980 orientierten Querrichtung 970 hintereinander angeordnet.

Der Befestigungselementestreifen 905 weist eine Vielzahl von ersten Verbindungsstegen 921 auf, welche jeweils zwei benachbarte Aufnahmen innerhalb einer ersten Reihe 906 von Aufnahmen 909 miteinander verbinden. Weiterhin weist der Befestigungselementestreifen 905 eine Vielzahl von zweiten Verbindungsstegen 922 auf, welche jeweils zwei benachbarte Aufnahmen innerhalb einer zweiten Reihe 907 von Aufnahmen 909 miteinander verbinden. Weiterhin weist der Befestigungselementestreifen 905 eine Vielzahl von dritten Verbindungsstegen 923 auf, welche jeweils eine Aufnahme der ersten Reihe 906 mit einer Aufnahme der zweiten Reihe 907 miteinander verbinden.

Dabei ist jede Aufnahme der ersten Reihe 906 mit einer benachbarten Aufnahme der zweiten Reihe 907 direkt über einen dritten Verbindungssteg 923 verbunden. Die ersten Verbindungsstege 921 und die zweiten Verbindungsstege 922 sind parallel zur Transportrichtung 990 ausgerichtet, wohingegen die dritten Verbindungsstege 923 senkrecht zur Transportrichtung 990 und parallel zur Querrichtung 970 ausgerichtet sind. Ausserdem ist jede Aufnahme zu allen anderen Aufnahmen der Reihen 906, 907 in der Transportrichtung 890 um den gleichen Betrag versetzt angeordnet.

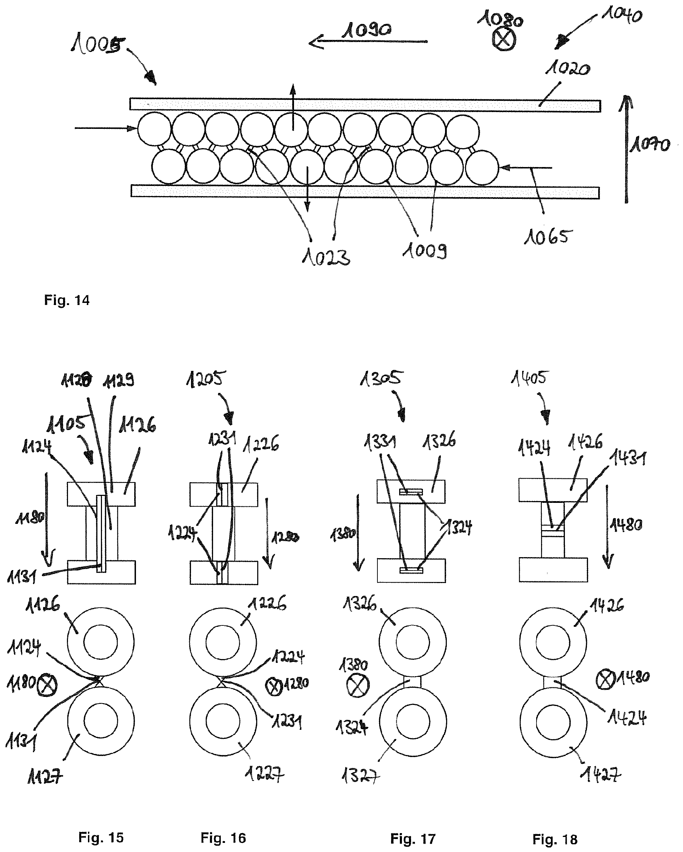

In den Fig. 13 und 14 ist ein Befestigungselementestreifen 1005 in einer Aufsicht dargestellt, welcher zwei in einer Transportrichtung 1090 ausgerichtete Reihen 1006, 1007 von Aufnahmen 1009 sowie in den Aufnahmen 1009 aufgenommene und eine in die Zeichenebene hinein gerichtete Befestigungsrichtung 1080 definierende, nicht gezeigte Befestigungselemente umfasst. Die Reihen 1006, 1007 von Aufnahmen 1009 sind in einer senkrecht zur Transportrichtung 1090 und senkrecht zur Befestigungsrichtung 1080 orientierten Querrichtung 1070 hintereinander angeordnet.

Der Befestigungselementestreifen 1005 weist eine Vielzahl von Verbindungsstegen 1023 auf, welche jeweils eine Aufnahme der ersten Reihe 1006 mit einer Aufnahme der zweiten Reihe 1007 miteinander verbinden. Dabei ist jede Aufnahme der ersten Reihe 1006 mit einer benachbarten Aufnahme der zweiten Reihe 1007 direkt über einen Verbindungssteg 1023 verbunden. Allerdings ist jede Aufnahme der ersten Reihe 1006 beziehungsweise der zweiten Reihe 1007 mit einer benachbarten Aufnahme derselben Reihe 1006, 1007 nur indirekt verbunden, nämlich über eine Aufnahme der jeweils anderen Reihe 1007, 1006. Dadurch lassen sich jeweils zwei benachbarte Aufnahmen derselben Reihe 1006, 1007 aufeinander zu bewegen, bis sie sich berühren. Die Steifigkeit des Befestigungselementestreifens 1005 ist also reduziert.

Wird der Befestigungselementestreifen 1005 in einen Führungskanal 1020 eines Magazins 1040 einer nicht weiter gezeigten Eintreibvorrichtung eingesetzt und von einem nicht gezeigten Vorschubelement mit einer Kraft 1065 in der Transportrichtung beaufschlagt, wie in Fig. 14 dargestellt, dann lässt sich der Befestigungselementestreifen 1005 in der Transportrichtung 1005 zusammendrücken, so dass sich seine Breite in der Querrichtung 1070 erhöht. Vor dem Zusammendrücken hat der Befestigungselementestreifen 1005 dagegen eine geringere Breite in der Querrichtung 1070 und lässt sich einfacher in das Magazin 1040 einsetzen oder aus dem Magazin 1040 herausnehmen.

In Fig. 15 ist ein Ausschnitt eines Befestigungselementestreifens 1105 dargestellt, nämlich unten in einer Aufsicht und oben in einem Querschnitt. Der Befestigungselementestreifen 1105 weist eine erste Aufnahme 1126 für ein nicht gezeigtes Befestigungselement und eine zweite Aufnahme 1127 für ein weiteres nicht gezeigtes Befestigungselement auf. Die Aufnahmen 1126, 1127 definieren eine Befestigungsrichtung 1180. Die Aufnahme 1126 umfasst einen hohlen Schaft 1128 sowie zwei Führungsrondellen 1129, welche das sich durch den Schaft 1128 und die Führungsrondellen 1129 hindurch erstreckende Befestigungselement in einem nicht gezeigten Setzkanal führen, während das Befestigungselement in einen Untergrund eingetrieben wird.

Der Befestigungselementestreifen 1105 umfasst einen Verbindungssteg 1124, welcher die Aufnahmen 1126, 1127 direkt miteinander verbindet. Der Verbindungssteg 1124 weist eine Sollbruchstelle 1131 auf, welche parallel zur Befestigungsrichtung 1180 ausgerichtet ist und beispielsweise als linienförmige Materialverjüngung ausgebildet ist. Dadurch wird eine Vereinzelung der ersten Aufnahme 1126 und dem darin aufgenommenen Befestigungselement von der zweiten Aufnahme 1127 und damit vom übrigen Befestigungselementestreifen 1105 vereinfacht.

In Fig. 16 ist ein Ausschnitt eines Befestigungselementestreifens 1205 dargestellt, nämlich unten in einer Aufsicht und oben in einem Querschnitt. Der Befestigungselementestreifen 1205 weist eine erste Aufnahme 1226 für ein nicht gezeigtes Befestigungselement und eine zweite Aufnahme 1227 für ein weiteres nicht gezeigtes Befestigungselement auf. Die Aufnahmen 1226, 1227 definieren eine Befestigungsrichtung 1280. Der Befestigungselementestreifen 1205 umfasst zwei Verbindungsstege 1224, welche die Aufnahmen 1226, 1227 direkt miteinander verbinden. Jeder der Verbindungsstege 1224 weist eine Sollbruchstelle 1231 auf, welche parallel zur Befestigungsrichtung 1280 ausgerichtet ist und als linienförmige Materialverjüngung ausgebildet ist.

In Fig. 17 ist ein Ausschnitt eines Befestigungselementestreifens 1305 dargestellt, nämlich unten in einer Aufsicht und oben in einem Querschnitt. Der Befestigungselementestreifen 1305 weist eine erste Aufnahme 1326 für ein nicht gezeigtes Befestigungselement und eine zweite Aufnahme 1327 für ein weiteres nicht gezeigtes Befestigungselement auf. Die Aufnahmen 1326, 1327 definieren eine Befestigungsrichtung 1380. Der Befestigungselementestreifen 1305 umfasst zwei Verbindungsstege 1324, welche die Aufnahmen 1326, 1327 direkt miteinander verbinden. Jeder der Verbindungsstege 1324 weist eine Sollbruchstelle 1331 auf, welche senkrecht zur Befestigungsrichtung 1380 ausgerichtet ist und als linienförmige Materialverjüngung ausgebildet ist.

In Fig. 18 ist ein Ausschnitt eines Befestigungselementestreifens 1405 dargestellt, nämlich unten in einer Aufsicht und oben in einem Querschnitt. Der Befestigungselementestreifen 1405 weist eine erste Aufnahme 1426 für ein nicht gezeigtes Befestigungselement und eine zweite Aufnahme 1427 für ein weiteres nicht gezeigtes Befestigungselement auf. Die Aufnahmen 1426, 1427 definieren eine Befestigungsrichtung 1480. Der Befestigungselementestreifen 1405 umfasst einen Verbindungssteg 1424, welcher die Aufnahmen 1426, 1427 direkt miteinander verbindet. Der Verbindungssteg 1424 weist eine Sollbruchstelle 1431 auf, welche senkrecht zur Befestigungsrichtung 1380 ausgerichtet ist und als linienförmige Materialverjüngung ausgebildet ist.

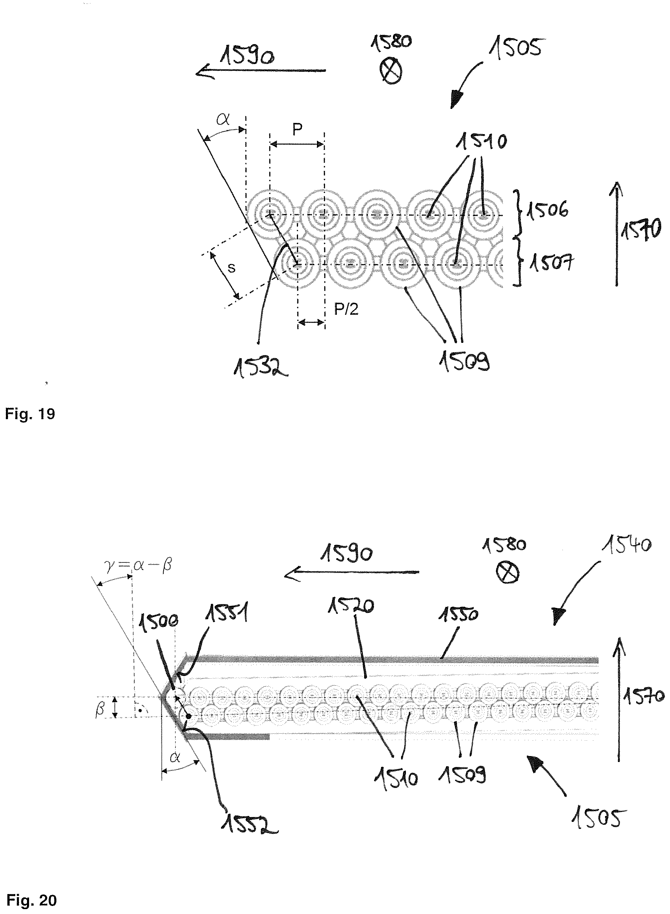

In den Fig. 19 und 20 ist ein Befestigungselementestreifen 1505 in einer Aufsicht teilweise dargestellt, welcher zwei in einer Transportrichtung 1590 ausgerichtete Reihen 1506, 1507 von Aufnahmen 1509 sowie in den Aufnahmen 1509 aufgenommene und eine in die Zeichenebene hinein gerichtete Befestigungsrichtung 1580 definierende Befestigungselemente 1510 umfasst. Die Reihen 1506, 1507 von Aufnahmen 1509 und damit von Befestigungselementen 1510 sind in einer senkrecht zur Transportrichtung 1590 und senkrecht zur Befestigungsrichtung 1580 orientierten Querrichtung 1570 hintereinander angeordnet.

Jede der Aufnahmen 1509 ist zu allen anderen Aufnahmen der Reihen 1506, 1507 in der Transportrichtung 1590 versetzt angeordnet. Der in der Transportrichtung 1590 gemessene Versatz P/2 zwischen zwei in der Transportrichtung 1590 unmittelbar aufeinanderfolgenden Aufnahmen ist für alle Aufnahmen gleich, nämlich genau halb so gross wie der Versatz P zwischen zwei unmittelbar aufeinanderfolgenden Aufnahmen innerhalb jeweils einer der Reihen 1506, 1507. Eine kürzeste Verbindungslinie 1532 zwischen zwei unmittelbar aufeinanderfolgenden Aufnahmen verschiedener Reihen 1506, 1507 ist gegenüber der Querrichtung 1570 um einen Winkel α geneigt. Eine Länge der Verbindungslinie 1532 oder Abstand s zwischen zwei unmittelbar aufeinanderfolgenden Aufnahmen verschiedener Reihen 1506, 1507 ist vorzugsweise gleich gross wie der Versatz P zwischen zwei unmittelbar aufeinanderfolgenden Aufnahmen innerhalb einer der Reihen 1506, 1507. Wegen der Beziehung P/2 = s sina ist in diesem bevorzugten Fall α = 30°.

Der Befestigungselementestreifen 1505 ist in ein Magazin 1540 eingelegt, welches die Befestigungselemente 1510 der Reihe nach in einen Setzkanal 1500 hineintransportiert. Das Magazin 1540 umfasst ein Magazingehäuse 1550, welches eine erste Einführschräge 1551 und eine zweite Einführschräge 1552 aufweist. Die erste Einführschräge 1551 und die zweite Einführschräge 1552 sind jeweils gegenüber der Querrichtung 1570 um einen Winkel γ geneigt. Das Magazin 1540 weist einen Führungskanal 1520 zur Führung der Befestigungselemente 1510 bis in den Setzkanal 1500 hinein auf. Der Führungskanal 1520 ist um eine gegenüber dem Setzkanal versetzte und parallel zur Befestigungsrichtung 1580 ausgerichtete, nicht gezeigte Schwenkachse um einen Verschwenkwinkel β verschwenkbar gelagert. Ein maximaler Neigungswinkel γ der Einführschrägen 1551, 1552 gegenüber der Querrichtung 1570 beträgt dann γ = α - β. Um den Reibungswiderstand zwischen dem Befestigungselementestreifen 1505 und den Einführschrägen 1551, 1552 zu reduzieren, ist ein möglichst grosser Neigungswinkel γ vorteilhaft.

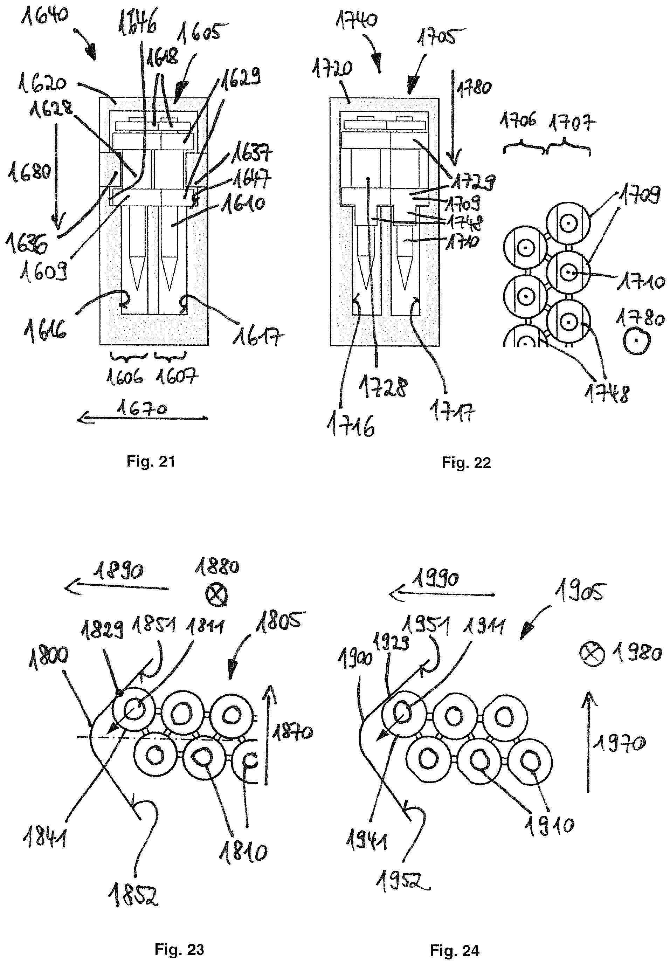

In Fig. 21 sind ein Magazin 1640 und ein Befestigungselementestreifen 1605 in einer Schnittansicht dargestellt. Das Magazin umfasst einen Führungskanal 1620, in welchen der Befestigungselementestreifen 1605 eingesetzt ist. Der Befestigungselementestreifen 1605 umfasst zwei Reihen 1606, 1607 von Aufnahmen 1609 sowie in den Aufnahmen 1609 aufgenommene und eine Befestigungsrichtung 1680 definierende Befestigungselemente 1610. Die Reihen 1606, 1607 von Aufnahmen 1609 und damit von Befestigungselementen 1610 sind in einer Querrichtung 1670 hintereinander angeordnet. Jede der Aufnahmen 1609 umfasst einen hohlen Schaft 1628 sowie zwei Führungsrondellen 1629, welche das sich durch den Schaft 1628 und die Führungsrondellen 1629 hindurch erstreckende Befestigungselement in einem nicht gezeigten Setzkanal führen, während das Befestigungselement in einen Untergrund eingetrieben wird. Köpfe 1618 der Befestigungselemente 1610 dienen unter Umständen ebenfalls einer solchen Führung.

Zur Führung der Reihen 1606, 1607 von Befestigungselementen 1610 umfasst der Führungskanal 1620 eine erste Führungsnut 1616 für die erste Reihe 1606 sowie eine zweite Führungsnut 1617 für die zweite Reihe 1607. Ausserdem weist der Führungskanal 1620 einen der ersten Reihe 1606 zugeordneten ersten Führungsvorsprung 1636 und einen der zweiten Reihe 1607 zugeordneten zweiten Führungsvorsprung 1637 auf. Die Führungsvorsprünge 1636, 1637 greifen dazu in einen Zwischenraum zwischen den Führungsrondellen 1629 ein. Darüber hinaus weist der Führungskanal 1620 eine der ersten Reihe 1606 zugeordnete erste Führungsvertiefung 1646 und eine der zweiten Reihe 1607 zugeordnete zweite Führungsvertiefung 1647 auf. Die Führungsvertiefungen 1646, 1647 nehmen dabei jeweils eine der Führungsrondellen 1629 auf.

In Fig. 22 sind ein Magazin 1740 und ein Befestigungselementestreifen 1705 links in einer Schnittansicht und rechts in einer Aufsicht dargestellt. Das Magazin umfasst einen Führungskanal 1720, in welchen der Befestigungselementestreifen 1705 eingesetzt ist. Der Befestigungselementestreifen 1705 umfasst zwei Reihen 1706, 1707 von Aufnahmen 1709 sowie in den Aufnahmen 1709 aufgenommene und eine Befestigungsrichtung 1780 definierende Befestigungselemente 1710. Jede der Aufnahmen 1709 umfasst einen hohlen Schaft 1728 sowie zwei Führungsrondellen 1729, welche das sich durch den Schaft 1728 und die Führungsrondellen 1729 hindurch erstreckende Befestigungselement 1710 in einem nicht gezeigten Setzkanal führen, während das Befestigungselement in einen Untergrund eingetrieben wird.

Zur Führung der Befestigungselemente 1710 umfasst der Führungskanal 1720 eine erste Führungsnut 1716 sowie eine zweite Führungsnut 1717. Ausserdem weist die jeweils in Befestigungsrichtung weisende Führungsrondelle 1729 einen Fortsatz 1748 auf, welche in die jeweilige Führungsnut 1716, 1717 eingreift und die Führung der Befestigungselemente 1710 in der jeweiligen Führungsnut 1716, 1717 verbessert. Die Fortsätze 1748 sind dabei vorzugsweise jeweils als Zweiflach ausgebildet.

In Fig. 23 sind ein Setzkanal 1800 und ein Befestigungselementestreifen 1805 mit Befestigungselementen 1810 in einer Aufsicht teilweise dargestellt. Die Befestigungselemente 1810 werden in einem nicht gezeigten Magazin in einer Transportrichtung 1890 in den Setzkanal 1800 transportiert. Die Befestigungselemente 1810 sind als Nägel ausgebildet und definieren eine Befestigungsrichtung 1880 in die Zeichenebene hinein, so dass in Fig. 23 nur die Köpfe der Befestigungselemente 1810 zu sehen sind. Die Befestigungselemente 1810 sind in zwei Reihen angeordnet, welche in einer senkrecht zur Transportrichtung 1890 und senkrecht zur Befestigungsrichtung 1880 orientierten Querrichtung 1870 hintereinander angeordnet sind.

An dem Setzkanal 1800 starr befestigt sind eine erste Einführschräge 1851 und eine zweite Einführschräge 1852. Die erste Einführschräge 1851 ist zu der Transportrichtung 1890 geneigt und dient einer Führung des in der Transportrichtung 1890 vordersten Befestigungselements 1811 der in Fig. 23 oberen Reihe von Befestigungselementen 1810 auf den Setzkanal 1800 zu, indem die Aufnahme 1841 des vordersten Befestigungselements 1811 die erste Einführschräge 1851 linienförmig berührt und insbesondere tangential über die erste Einführschräge 1851 gleitet. Die linienförmige Berührung 1829 ist dabei parallel zur Befestigungsrichtung ausgerichtet.

In Fig. 24 sind ein Setzkanal 1900 und ein Befestigungselementestreifen 1905 mit Befestigungselementen 1910 in einer Aufsicht teilweise dargestellt. Die Befestigungselemente 1910 werden in einem nicht gezeigten Magazin in einer Transportrichtung 1990 in den Setzkanal 1900 transportiert. Die Befestigungselemente 1910 sind als Nägel ausgebildet und definieren eine Befestigungsrichtung 1980 in die Zeichenebene hinein, so dass in Fig. 24 nur die Köpfe der Befestigungselemente 1910 zu sehen sind. Die Befestigungselemente 1910 sind in zwei Reihen angeordnet, welche in einer senkrecht zur Transportrichtung 1990 und senkrecht zur Befestigungsrichtung 1980 orientierten Querrichtung 1970 hintereinander angeordnet sind.

An dem Setzkanal 1900 starr befestigt sind eine erste Einführschräge 1951 und eine zweite Einführschräge 1952. Die erste Einführschräge 1951 ist zu der Transportrichtung 1990 geneigt und dient einer Führung des in der Transportrichtung 1990 vordersten Befestigungselements 1911 der in Fig. 24 oberen Reihe von Befestigungselementen 1910 auf den Setzkanal 1900 zu, indem die Aufnahme 1941 des vordersten Befestigungselements 1911 die erste Einführschräge 1951 flächig berührt und über die erste Einführschräge 1951 gleitet. Die flächenförmige Berührung 1929 ist dabei insbesondere eben und parallel zur Befestigungsrichtung 1980 ausgerichtet.

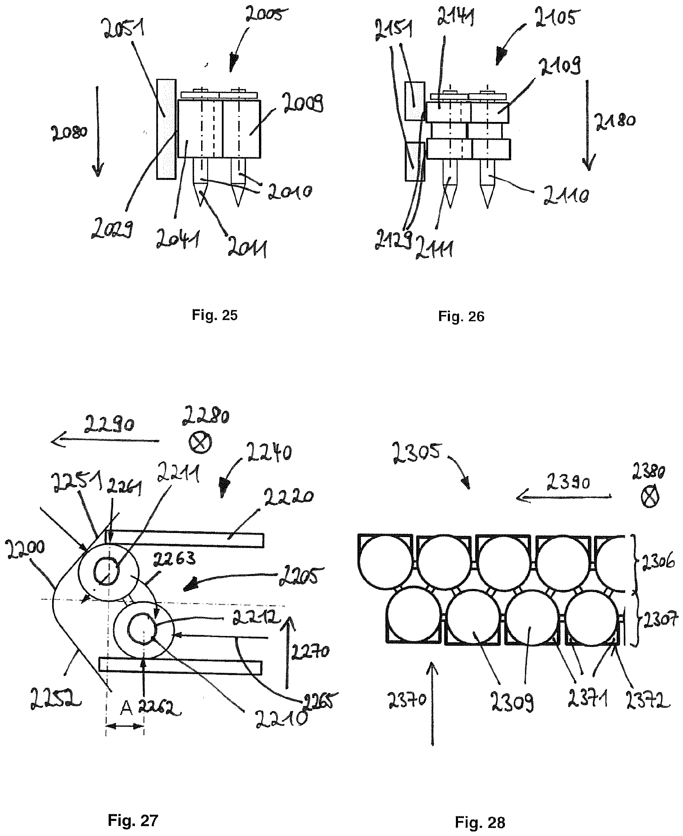

In Fig. 25 sind eine Einführschräge 2051 und ein Befestigungselementestreifen 2005 mit Befestigungselementen 2010 in einer Schnittansicht teilweise dargestellt. Die Befestigungselemente 2010 definieren eine Befestigungsrichtung 2080 und sind in Aufnahmen 2009 des Befestigungselementestreifens 2005 aufgenommen und gehalten. Die Einführschräge 2051 dient einer Führung des Befestigungselementestreifens 2005, indem die Aufnahme 2041 eines vordersten Befestigungselements 2011 die Einführschräge 2051 flächig berührt und über die erste Einführschräge 2051 gleitet. Die flächenförmige Berührung 2029 ist dabei insbesondere eben und parallel zur Befestigungsrichtung 2080 ausgerichtet. Ausserdem erstreckt sich die Berührung 2029 über die gesamte Länge der Aufnahme 2041 in der Befestigungsrichtung 2080.

In Fig. 26 sind eine Einführschräge 2151 und ein Befestigungselementestreifen 2105 mit Befestigungselementen 2110 in einer Schnittansicht teilweise dargestellt. Die Befestigungselemente 2110 definieren eine Befestigungsrichtung 2180 und sind in Aufnahmen 2109 des Befestigungselementestreifens 2105 aufgenommen und gehalten. Die Einführschräge 2151 dient einer Führung des Befestigungselementestreifens 2105, indem die Aufnahme 2141 eines vordersten Befestigungselements 2111 die Einführschräge 2151 flächig berührt und über die erste Einführschräge 2151 gleitet. Die flächenförmige Berührung 2129 ist dabei insbesondere eben und parallel zur Befestigungsrichtung 2180 ausgerichtet. Ausserdem sind die Einführschräge 2151 und damit die Berührung 2129 entlang der Befestigungsrichtung 2080 unterbrochen.

In Fig. 27 sind ein Setzkanal 2200 und ein Magazin 2240 mit einem darin angeordneten Befestigungselementestreifen 2205 mit Befestigungselementen 2210 in einer Aufsicht teilweise dargestellt. Die Befestigungselemente 2210 werden in dem Magazin 2240 in einer Transportrichtung 2290 in den Setzkanal 2200 transportiert. Die Befestigungselemente 2210 sind als Nägel ausgebildet und definieren eine Befestigungsrichtung 2280 in die Zeichenebene hinein, so dass in Fig. 27 nur die Köpfe der Befestigungselemente 2210 zu sehen sind. Die Befestigungselemente 2210 sind in zwei Reihen angeordnet, welche in einer senkrecht zur Transportrichtung 2290 und senkrecht zur Befestigungsrichtung 2280 orientierten Querrichtung 2270 hintereinander angeordnet sind. An dem Setzkanal 2200 starr befestigt sind eine erste Einführschräge 2251 und eine zweite Einführschräge 2252. Die erste Einführschräge 2251 ist zu der Transportrichtung 2290 geneigt und dient einer Führung des in der Transportrichtung 2290 vordersten Befestigungselements 2211 der in Fig. 27 oberen Reihe von Befestigungselementen 2210 auf den Setzkanal 2200 zu.

Das in der Transportrichtung 2290 vorderste Befestigungselement 2211 der in Fig. 27 oberen Reihe berührt ausserdem einen Führungskanal 2220 des Magazins 2240 an einer Stelle 2261, wohingegen das in der Transportrichtung 2290 vorderste Befestigungselements 2212 der in Fig. 27 unteren Reihe den Führungskanal 2220 an einer zweiten Berührstelle 2262 berührt. Da in der in Fig. 27 gezeigten Situation nur noch jeweils ein Befestigungselement von jeder Reihe von Befestigungselementen in dem Magazin 2240 vorhanden ist, ist ein in der Transportrichtung 2290 gemessener Abstand A zwischen den Berührstellen 2261, 2262 relativ gering. Dadurch bewirkt eine Kraft 2265, welche beispielsweise von einem nicht gezeigten Vorschubelement des Magazins 2240 auf den Befestigungselementestreifen 2205 ausgeübt wird, ein relativ grosses Drehmoment 2263 auf die verbleibenden Befestigungselemente 2210, was unter Umständen zu einem Verklemmen des Befestigungselementestreifens 2205 führen kann.

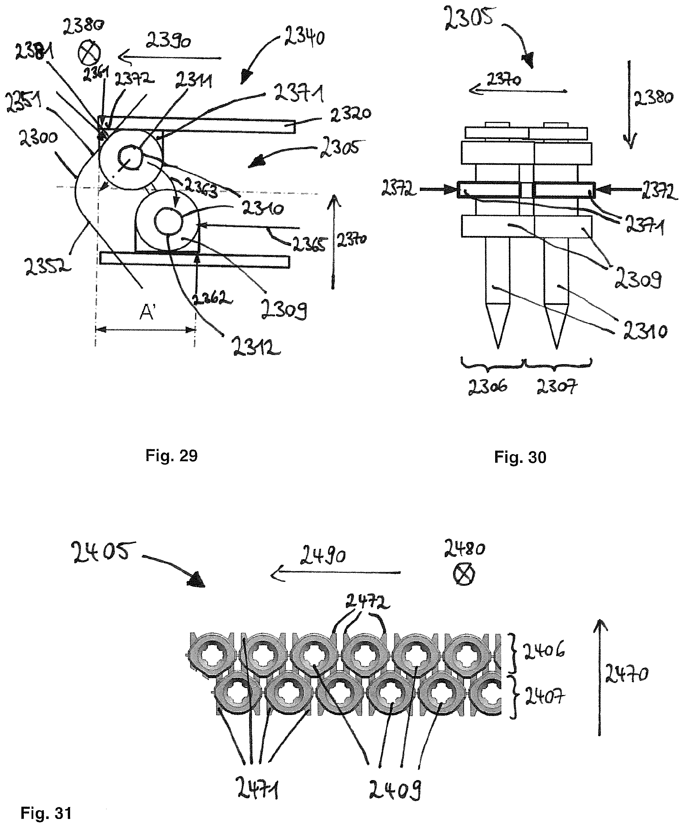

In den Fig. 28 und 29 sind ein Setzkanal 2300 und ein Magazin 2340 mit einem darin angeordneten Befestigungselementestreifen 2305 in einer Aufsicht und in Fig. 30 in einer Schnittansicht dargestellt. Der Befestigungselementestreifen 2305 umfasst zwei in einer Transportrichtung 2390 ausgerichtete Reihen 2306, 2307 von Aufnahmen 2309 sowie in den Aufnahmen 2309 aufgenommene und eine Befestigungsrichtung 2380 definierende Befestigungselemente 2310. Die Reihen 2306, 2307 von Aufnahmen 2309 sind in einer senkrecht zur Transportrichtung 2390 und senkrecht zur Befestigungsrichtung 2380 orientierten Querrichtung 2370 hintereinander angeordnet. An dem Setzkanal 2300 starr befestigt sind eine erste Einführschräge 2351 und eine zweite Einführschräge 2352. Die erste Einführschräge 2351 ist zu der Transportrichtung 2390 geneigt und dient einer Führung des in der Transportrichtung 2390 vordersten Befestigungselements 2311 der in Fig. 29 oberen Reihe von Befestigungselementen 2310 auf den Setzkanal 2300 zu.

Der Befestigungselementestreifen 2305 weist Stützvorsprünge 2371 mit jeweils einer Anlagefläche 2372 für eine Anlage des Befestigungselementestreifens 2305 an einen Führungskanal 2320 des Magazins 2340 auf. Die Stützvorsprünge 2371 ragen jeweils von einer Aufnahme 2309 einer Reihe 2306, 2307 ab und sind gegenüber dem in der Aufnahme 2309 aufgenommenen Befestigungselement 2310 in der Transportrichtung 2390 versetzt. Durch den Versatz in der Transportrichtung 2390 stützen die Stützvorsprünge 2371 den Befestigungselementestreifen 2305 in dem Führungskanal gegen ein Verkippen um eine in die Befestigungsrichtung 2380 weisende Kippachse ab und wirken somit einem entsprechenden Drehmoment entgegen.

Das in der Transportrichtung 2390 vorderste Befestigungselement 2311 der in Fig. 29 oberen Reihe stützt sich an dem Führungskanal 2320 des Magazins 2340 an einer Stelle 2361 ab, wohingegen das in der Transportrichtung 2390 vorderste Befestigungselement 2312 der in Fig. 29 unteren Reihe sich an dem Führungskanal 2320 an einer zweiten Berührstelle 2362 abstützt. Obwohl in der in Fig. 29 gezeigten Situation nur noch jeweils ein Befestigungselement von jeder Reihe von Befestigungselementen in dem Magazin 2340 vorhanden ist, ist ein in der Transportrichtung 2390 gemessener Abstand A' zwischen den Berührstellen 2361, 2362 grösser, insbesondere wesentlich grösser, als ein Versatz zwischen den Befestigungselementen 2311, 2312 in der Transportrichtung 2390. Dadurch bewirkt eine Kraft 2365, welche beispielsweise von einem nicht gezeigten Vorschubelement des Magazins 2340 auf den Befestigungselementestreifen 2305 ausgeübt wird, ein relativ kleines Drehmoment 2363 auf die verbleibenden Befestigungselemente 2310, wodurch die Gefahr eines Verklemmens des Befestigungselementestreifens 2305 reduziert ist. Wie in Fig. 29 dargestellt ist, sind der vorderste Stützvorsprung 2381 der oberen Reihe von Befestigungselementen 2310 und die erste Einführschräge 2351 in der Befestigungsrichtung 2380 hintereinander angeordnet und überschneiden sich vorzugsweise in einer Projektion in der Befestigungsrichtung 2380.

In Fig. 31 ist ein Befestigungselementestreifen 2405 in einer Aufsicht dargestellt. Der Befestigungselementestreifen 2405 umfasst zwei in einer Transportrichtung 2490 ausgerichtete Reihen 2406, 2407 von Aufnahmen 2409 sowie in den Aufnahmen 2409 aufgenommene, nicht gezeigte Befestigungselemente, welche eine Befestigungsrichtung 2480 in die Zeichenebene hinein definieren. Die Reihen 2406, 2407 von Aufnahmen 2409 sind in einer senkrecht zur Transportrichtung 2490 und senkrecht zur Befestigungsrichtung 2480 orientierten Querrichtung 2470 hintereinander angeordnet.

Der Befestigungselementestreifen 2405 weist Stützvorsprünge 2471 mit jeweils einer Anlagefläche 2472 für eine Anlage des Befestigungselementestreifens 2405 an einen nicht gezeigten Führungskanal eines Magazins einer Eintreibvorrichtung auf. Die Stützvorsprünge 2471 ragen jeweils von einer Aufnahme 2409 einer Reihe 2406, 2407 ab und sind gegenüber dem in der Aufnahme 2409 aufgenommenen Befestigungselement in der Transportrichtung 2490 versetzt. Durch den Versatz in der Transportrichtung 2490 stützen die Stützvorsprünge 2471 den Befestigungselementestreifen 2405 in dem Führungskanal gegen ein Verkippen um eine in die Befestigungsrichtung 2480 weisende Kippachse ab.

Die Erfindung wurde anhand einer Reihe von Ausführungsbeispielen beschrieben. Die einzelnen Merkmale der verschiedenen Ausführungsbeispiele sind einzeln oder in beliebiger Kombination miteinander anwendbar, soweit sie sich nicht widersprechen. Es wird darauf hingewiesen, dass die erfindungsgemässe Vorrichtung und der erfindungsgemässe Befestigungselementestreifen auch für andere Anwendungen einsetzbar sind.

## Patentansprüche

1. Verfahren zum Eintreiben von Befestigungselementen in einen Untergrund mittels einer Vorrichtung (10), welche versehen ist mit einem Setzkanal (99), einem in dem Setzkanal in einer Befestigungsrichtung (80) bewegbaren Energieübertragungselement (75) zur Übertragung von Energie auf jeweils eines der Befestigungselemente, und mit einem Magazin (40) für einen Transport der Befestigungselemente in einer Transportrichtung (90) zu dem Setzkanal (99), wobei das Magazin (40) mehrere Reihen von Befestigungselementen gleichzeitig transportiert, welche in einer senkrecht zur Transportrichtung (90) und senkrecht zur Befestigungsrichtung (80) orientierten Querrichtung (170) hintereinander angeordnet sind, um Befestigungselemente von verschiedenen Reihen der mehreren Reihen von Befestigungselementen abwechselnd in den Setzkanal (99) hinein zu transportieren, wobei die Vorrichtung (10) eine zu der Transportrichtung (90) geneigte Einführschräge (151) zur Führung des in der Transportrichtung vordersten Befestigungselements der mehreren Reihen von Befestigungselementen in den Setzkanal (99) hinein aufweist, **dadurch gekennzeichnet, dass** die Einführschräge (151) die Reihe des vordersten Befestigungselements der mehreren Reihen von Befestigungselementen auf den Setzkanal (99) ausrichtet.

2. Verfahren nach Anspruch 1, wobei das Magazin (40) ein Vorschubelement (160) aufweist, welches die mehreren Reihen von Befestigungselementen mit einer Kraft in der Transportrichtung (90) beaufschlagt, wobei das Vorschubelement (160) mehrere in der Transportrichtung zueinander versetzte Anlageflächen (161, 162) für eine Anlage an jeweils eine der mehreren Reihen von Befestigungselementen aufweist.

3. Verfahren nach einem der vorhergehenden Ansprüche, wobei die Vorrichtung (10) ein Anpresselement (672) aufweist, das bei einem Anpressen der Vorrichtung (10) an den Untergrund gegenüber dem Magazin (40) versetzt wird, und das eine Kraftübertragungsfläche (673) aufweist, welche eine Kraft auf das in der Transportrichtung (90) vorderste Befestigungselement der mehreren Reihen von Befestigungselementen auf den Setzkanal (99) zu überträgt.

4. Verfahren nach einem der vorhergehenden Ansprüche, wobei das Magazin (40) einen Führungskanal (120) zur Führung der mehreren Reihen von Befestigungselementen aufweist, wobei der Führungskanal (120) mit einer Mündung (125) in den Setzkanal (99) mündet, wobei die Mündung (125) in der Querrichtung (170) zwischen einer ersten Position und einer zweiten Position hin und her bewegt wird.

5. Verfahren nach den Ansprüchen 3 und 4, wobei der Führungskanal (120) eine Gegensteuerfläche (677) aufweist, welche die Mündung (125) in die erste oder zweite Position steuert, wenn die Kraftübertragungsfläche (673) des Anpresselements (672) an der Gegensteuerfläche (677) angreift.

6. Verfahren nach einem der Ansprüche 4 und 5, wobei der Führungskanal (120) um eine gegenüber dem Setzkanal (99) insbesondere parallel versetzte Schwenkachse (130) verschwenkt wird.

7. Verfahren nach Anspruch 6, wobei die Schwenkachse (130) den Führungskanal (120) oder eine gedachte Verlängerung des Führungskanals in oder entgegen der Transportrichtung (90) schneidet.

8. Befestigungselementestreifen (805) für eine Verwendung in einer Vorrichtung zum Eintreiben von Befestigungselementen in einen Untergrund, mit mehreren in einer Transportrichtung (890) ausgerichteten Reihen (806, 807) von Aufnahmen (809) für Befestigungselemente sowie in den Aufnahmen (809) aufgenommenen und eine Befestigungsrichtung (880) definierenden Befestigungselementen (710), wobei die Reihen von Aufnahmen in einer senkrecht zur Transportrichtung (890) und senkrecht zur Befestigungsrichtung (880) orientierten Querrichtung (870) hintereinander angeordnet sind, und mit einem Verbindungssteg (821), der eine Aufnahme (809) einer ersten Reihe (806) der mehreren Reihen mit einer Aufnahme (809) einer zweiten Reihe (807) der mehreren Reihen miteinander verbindet, **dadurch gekennzeichnet, dass** jede Aufnahme (809) zu allen anderen Aufnahmen der mehreren Reihen (806, 807) von Aufnahmen in der Transportrichtung (890) versetzt ist.

9. Befestigungselementestreifen nach Anspruch 8, wobei der in der Transportrichtung (890) gemessene Versatz zwischen zwei in der Transportrichtung aufeinanderfolgenden Aufnahmen (809) für im Wesentlichen alle Aufnahmen gleich ist.

10. Befestigungselementestreifen nach einem der Ansprüche 8 bis 9, wobei jede Aufnahme (809) der ersten Reihe (806) mit einer benachbarten Aufnahme (809) einer zweiten Reihe (807) direkt über einen Verbindungssteg (821) verbunden ist.

11. Befestigungselementestreifen nach einem der Ansprüche 8 bis 10, wobei der Verbindungssteg (821) eine Sollbruchstelle (1131) für eine Vereinzelung zumindest einer der Aufnahmen (809) in der Vorrichtung zum Eintreiben von Befestigungselementen in einen Untergrund aufweist.

12. Befestigungselementestreifen nach einem der Ansprüche 8 bis 11, wobei der Befestigungselementestreifen (2305) einen Stützvorsprung (2371) mit einer Anlagefläche (2372) für eine Anlage des Befestigungselementestreifens an einen Führungskanal eines Magazins der Vorrichtung zum Eintreiben von Befestigungselementen in einen Untergrund aufweist, wobei der Stützvorsprung (2371) von einer Aufnahme (2309) einer äussersten Reihe der mehreren Reihen abragt und gegenüber einem in der Aufnahme (2309) aufgenommenen Befestigungselement (2310) in der Transportrichtung (2390) versetzt ist.

## Claims

1. Method for driving fastening elements into a substrate by means of an apparatus (10) which is provided with a setting channel (99), with an energy-transmission element (75) which is movable in a fastening direction (80) in the setting channel and serves for transmitting energy to in each case one of the fastening elements, and with a magazine (40) for transporting the fastening elements in a transport direction (90) to the setting channel (99), wherein the magazine (40) simultaneously transports multiple rows of fastening elements arranged one behind the other in a transverse direction (170), which is oriented perpendicularly to the transport direction (90) and perpendicularly to the fastening direction (80), in order to alternately transport fastening elements of different rows of the multiple rows of fastening elements into the setting channel (99), wherein the apparatus (10) has an insertion bevel (151) which is inclined in relation to the transport direction (90) and which serves for guiding that fastening element of the multiple rows of fastening elements which is foremost in the transport direction into the setting channel (99), **characterized in that** the insertion bevel (151) aligns the row of the foremost fastening element of the multiple rows of fastening elements with the setting channel (99).

2. Method according to Claim 1, wherein the magazine (40) has a feed element (160) which subjects the multiple rows of fastening elements to a force in the transport direction (90), wherein the feed element (160) has multiple abutment surfaces (161, 162) for abutment against in each case one of the multiple rows of fastening elements, which abutment surfaces are offset in the transport direction from one another.

3. Method according to either of the preceding claims, wherein the apparatus (10) has a pressure-exertion element (672) which is displaced in relation to the magazine (40) when the apparatus (10) is pressed against the substrate and which has a force-transmission surface (673) which transmits a force to that fastening element of the multiple rows of fastening elements which is foremost in the transport direction (90) towards the setting channel (99).

4. Method according to one of the preceding claims, wherein the magazine (40) has a guide channel (120) for guiding the multiple rows of fastening elements, wherein the guide channel (120) opens out into the setting channel (99) by way of a mouth (125), wherein the mouth (125) is moved back and forth in the transverse direction (170) between a first position and a second position.

5. Method according to Claims 3 and 4, wherein the guide channel (120) has a counterpart control surface (677) which provides control for movement of the mouth (125) into the first or second position when the force-transmission surface (673) of the pressure-exertion element (672) acts on the counterpart control surface (677).

6. Method according to either of Claims 4 and 5, wherein the guide channel (120) is pivoted about a pivot axis (130) which is offset, in particular in a parallel manner, from the setting channel (99).

7. Method according to Claim 6, wherein the pivot axis (130) intersects the guide channel (120) or an imaginary extension of the guide channel in or counter to the transport direction (90).

8. Fastening-element strip (805) for use in an apparatus for driving fastening elements into a substrate, having multiple rows (806, 807), oriented in a transport direction (890), of receptacles (809) for fastening elements and having fastening elements (710) which are accommodated in the receptacles (809) and which define a fastening direction (880), wherein the rows of receptacles are arranged one behind the other in a transverse direction (870), which is oriented perpendicularly to the transport direction (890) and perpendicularly to the fastening direction (880), and having a connecting web (821) which connects a receptacle (809) of a first row (806) of the multiple rows to a receptacle (809) of a second row (807) of the multiple rows to one another, **characterized in that** each receptacle (809) is offset in the transport direction (890) from all the other receptacles of the multiple rows (806, 807) of receptacles.

9. Fastening-element strip according to Claim 8, wherein the offset, measured in the transport direction (890), between two receptacles (809) arranged in succession in the transport direction is the same for substantially all the receptacles.

10. Fastening-element strip according to either of Claims 8 and 9, wherein each receptacle (809) of the first row (806) is connected to an adjacent receptacle (809) of a second row (807) directly via a connecting web (821).

11. Fastening-element strip according to one of Claims 8 to 10, wherein the connecting web (821) has a predetermined breaking point (1131) for separation of at least one of the receptacles (809) in the apparatus for driving fastening elements into a substrate.

12. Fastening-element strip according to one of Claims 8 to 11, wherein the fastening-element strip (2305) has a support projection (2371) with an abutment surface (2372) for abutment of the fastening-element strip against a guide channel of a magazine of the apparatus for driving fastening elements into a substrate, wherein the support projection (2371) protrudes from a receptacle (2309) of an outermost row of the multiple rows and is offset in the transport direction (2390) from a fastening element (2310) accommodated in the receptacle (2309).

## Revendications

1. Procédé permettant d'enfoncer des éléments de fixation dans un substrat au moyen d'un dispositif (10), lequel est pourvu d'un canal de pose (99), d'un élément de transmission d'énergie (75) déplaçable dans un sens de fixation (80) dans le canal de pose pour la transmission d'énergie à l'un des éléments de fixation respectivement, et d'un magasin (40) pour un transport des éléments de fixation dans un sens de transport (90) jusqu'au canal de pose (99), dans lequel le magasin (40) transporte simultanément plusieurs rangées d'éléments de fixation, lesquelles sont disposées les unes derrière les autres dans un sens transversal (170) perpendiculaire au sens de transport (90) et perpendiculaire au sens de fixation (80), afin de transporter en alternance des éléments de fixation de différentes rangées des plusieurs rangées d'éléments de fixation dans le canal de pose (99), dans lequel le dispositif (10) présente un biseau d'insertion (151), incliné par rapport au sens de transport (90), pour le guidage de l'élément de fixation, le plus à l'avant dans le sens de transport, des plusieurs rangées d'éléments de fixation dans le canal de pose (99), **caractérisé en ce que** le biseau d'insertion (151) aligne la rangée de l'élément de fixation le plus à l'avant des plusieurs rangées d'éléments de fixation sur le canal de pose (99).

2. Procédé selon la revendication 1, dans lequel le magasin (40) présente un élément d'avancement (160), lequel soumet les plusieurs rangées d'éléments de fixation à une force dans le sens de transport (90), dans lequel l'élément d'avancement (160) présente plusieurs surfaces d'appui (161, 162) décalées les unes par rapport aux autres dans le sens de transport pour un appui contre respectivement l'une des plusieurs rangées d'éléments de fixation.

3. Procédé selon l'une des revendications précédentes, dans lequel le dispositif (10) présente un élément de pression (672) qui est décalé par rapport au magasin (40) lors d'une pression du dispositif (10) contre le substrat, et qui présente une surface de transmission de force (673), laquelle transmet une force à l'élément de fixation, le plus à l'avant dans le sens de transport (90), des plusieurs rangées d'éléments de fixation vers le canal de pose (99).

4. Procédé selon l'une des revendications précédentes, dans lequel le magasin (40) présente un canal de guidage (120) pour le guidage des plusieurs rangées d'éléments de fixation, dans lequel le canal de guidage (120) débouche par un débouché (125) dans le canal de pose (99), dans lequel le débouché (125) est déplacé en va-et-vient entre une première position et une deuxième position dans le sens transversal (170).

5. Procédé selon les revendications 3 et 4, dans lequel le canal de guidage (120) présente une surface de commande conjuguée (677), laquelle commande le débouché (125) dans la première ou la deuxième position, lorsque la surface de transmission de force (673) de l'élément de pression (672) vient en prise avec la surface de commande conjuguée (677).

6. Procédé selon l'une des revendications 4 et 5, dans lequel le canal de guidage (120) est pivoté autour d'un axe de pivotement (130) décalé en particulier parallèlement par rapport au canal de pose (99).

7. Procédé selon la revendication 6, dans lequel l'axe de pivotement (130) croise le canal de guidage (120) ou un prolongement imaginaire du canal de guidage dans le sens de transport (90) ou en sens inverse à celui-ci.

8. Bande d'éléments de fixation (805) pour une utilisation dans un dispositif permettant d'enfoncer des éléments de fixation dans un substrat, comportant plusieurs rangées (806, 807), alignées dans un sens de transport (890), de logements (809) pour éléments de fixation ainsi que des éléments de fixation (710) logés dans les logements (809) et définissant un sens de fixation (880), dans laquelle les rangées de logement sont disposées les unes derrière les autres dans un sens transversal (870) orienté perpendiculairement au sens de transport (890) et perpendiculairement au sens de fixation (880), et comportant une nervure de liaison (821), qui relie l'un à l'autre un logement (809) d'une première rangée (806) des plusieurs rangées à un logement (809) d'une deuxième rangée (807) des plusieurs rangées, **caractérisée en ce que** chaque logement (809) est décalé par rapport à tous les autres logements des plusieurs rangées (806, 807) de logements dans le sens de transport (890).

9. Bande d'éléments de fixation selon la revendication 8, dans laquelle le décalage, mesuré dans le sens de transport (890), entre deux logements (809) consécutifs dans le sens de transport est identique pour sensiblement tous les logements.

10. Bande d'éléments de fixation selon l'une des revendications 8 et 9, dans laquelle chaque logement (809) de la première rangée (806) est relié à un logement adjacent (809) d'une deuxième rangée (807) directement par le biais d'une nervure de liaison (821).

11. Bande d'éléments de fixation selon l'une des revendications 8 à 10, dans laquelle la nervure de liaison (821) présente un point destiné à la rupture (1131) pour une séparation d'au moins l'un des logements (809) dans le dispositif permettant d'enfoncer des éléments de fixation dans un substrat.

12. Bande d'éléments de fixation selon l'une des revendications 8 à 11, la bande d'éléments de fixation (2305) présentant une saillie de support (2371) comportant une surface d'appui (2372) pour un appui de la bande d'éléments de fixation contre un canal de guidage d'un magasin du dispositif permettant d'enfoncer des éléments de fixation dans un substrat, la saillie de support (2371) dépassant d'un logement (2309) d'une rangée la plus à l'extérieur des plusieurs rangées et étant décalée dans le sens de transport (2390) par rapport à un élément de fixation (2310) logé dans le logement (2309).
